# EUROPEAN PATENT APPLICATION

(11) **EP 4 790 627 A1**
(43) Date of publication of application: **12.08.2026**
(21) Application number: 25156255.9
(22) Date of filing: 06.02.2025
(51) Int. Cl.: G06Q 30/0202, G06Q 30/0204, G06Q 50/16, G06N 3/045

(54) **AUTONOMOUS SYSTEM FOR OPTIMAL PROPERTY MARKET MATCHING**

(71) Applicant: CLC Capital SA, 1885 Chesières (CH)
(72) Inventor: KAUFMAN, Hans, 79098 Freiburg (DE); BLACKWELL, Brendon, 12047 Berlin (DE); SPENCER, William, Altrincham, Cheshire, WA15 0LR (GB); CAMILLERI, Stephanie, 1885 Chesières (CH)

(57) **Abstract**

A computer-implemented method for predicting a market demand in a specific geographic region such as a city or a neighbourhood, wherein responding to the market demand requires the exploitation of a property or a land in the specific geographic region, and for recommending at least one property or at least one land suitable for being exploited for the purpose of responding to the market demand, comprising the steps of: receiving and preprocessing a first multi-modal dataset and a second multi-modal dataset, wherein the first multi-modal dataset is known to be correlated with a market demand in the specific geographic region and wherein the second multi-modal dataset comprises at least spatial data, satellite image data, and land register data for a plurality of properties or a plurality of lands in the specific geographic region, to generate a preprocessed first multi-modal dataset and a second multi-modal dataset; predicting a market demand using spatio-temporal analysis of the preprocessed first multi-modal dataset, wherein a temporal analysis comprises using a recurrent neural network to analyse time-series data of a first mode of the preprocessed first multi-modal dataset, and wherein a spatial analysis comprises using a graph neural network (GNN) to analyse spatial data in a second mode of the preprocessed first multi-modal dataset; calculating a property suitability score or a land suitability score for each property or each land in the plurality of properties or plurality of lands in the land register data by combining results from convolutional neural network (CNN) analysis of satellite image data in a first mode of the preprocessed second multi-modal dataset and results from graph neural network (GNN) analysis of spatial data in a second mode of the preprocessed second multi-modal dataset; and recommending a plurality of optimal matches to a known list of operators for responding to the predicted market demand, wherein the plurality of optimal matches comprises property-operator pairs or land-operator pairs.

## Description

### TECHNICAL FIELD

The present invention relates to the technical field of property and land market analysis and more particularly to the field of efficient allocation of property and land resources for exploitation to meet a market demand.

### BACKGROUND

Property and land market analysis requires precise and efficient processing of vast amounts of diverse data. Traditional methods struggle with data scarcity at micro-local levels, dynamic market conditions, and the integration of heterogeneous data sources, leading to suboptimal market and resource allocations and inefficiencies.

Furthermore, traditional systems often lack the flexibility to address the specific needs of various real estate segments beyond standard residential and commercial properties. Segments such as accommodation for the vulnerable (e.g., elderly care, extra care housing, physical disability facilities, mental health facilities, kindergartens, daycare centers), infrastructure projects (e.g., EV charging stations, data centers), and specialized commercial sectors (e.g., food retailers) are frequently neglected due to the complexity of their requirements and the scarcity of tailored data. This results in inefficient market allocations and missed opportunities to meet critical societal needs.

New or dynamic fields which exhibit rapidly changing market demands for material and/or land resources often have difficulty matching their material and/or property needs with market availability for land and/or property.

Sudden market demands like those mentioned above may lead to rapid decision making on the part of investors and market operators to exploit an unsuitable or fragile property for responding to the market demand, without taking into account the geographical and topological suitability of the land or the property with regard to its environmental condition or with regard to how its exploitation for responding to a market demand may affect traffic congestion in the surrounding geographic area.

Further compounding the problem, local authorities regulating planning permission or building permit granting may be unable to take all factors into account before granting approval for construction or expansion of building or land development projects across a variety of real estate segments, due to a lack of time and resources. Additionally, such authorities may recognize that potential consequences associated with the exploitation of a land or a property for responding to a certain market demand must be weighed against the societal cost of not responding to the market demand.

Consequently, market demands and particularly market demands requiring the exploitation of land or property in an economic segment experiencing rapid growth and thus rapid changes in market demand may lead to non-optimal exploitation of land or property for the purpose of providing a response to the market demand.

### MARKET DEMAND: ELECTRIC VEHICLE CHARGING STATIONS

For example, market demand for electric vehicle charging stations is rapidly increasing, requiring not only the exploitation of land on which to put new electric vehicle charging stations, but also increasing demand on the local electricity grid, and demand for metals for manufacturing new charging stations, such as nickel, cobalt, and coltan, which must be mined in areas which often must be deforested for mining access. Many research studies have focused on planning suitable charging infrastructures for electric mobility yet unsuitable charging station construction or charging stations running far below capacity due to unsuitable location remains a problem.

Many factors should be considered for deciding where to build electric vehicle charging stations to avoid damage to the local environment. In addition, by strategically positioning an electric vehicle charging station in an urban environment, its exploitation can be maximized, ensuring that it is operating at near capacity and so reducing the overall need for mining of metals and the associated deforesting in a remote location from the land exploited for the purpose of providing electric vehicle charging stations. Such rapid mining of metals may be damaging to the local environment and contribute to resource depletion, and deforestation may contribute to climate change by removing valuable carbon capturing trees.

Typically, in order to take into account all of the factors mentioned, expertise from electrical engineers, topologists, geographers, and civil or structural engineers may be required.

### MARKET DEMAND: DEMENTIA CARE

As another example, consider dementia care in the UK. Predicting an accurate demand for the number of beds or rooms in a senior care facility presents numerous difficulties and existing methods for making decisions regarding allocation of resources may be biased. These difficulties may be even greater in the case of rural areas or sparsely populated areas, or wealthy or affluent areas due to a more limited use of social programs.

Therefore, there is a real need to incorporate further and diverse sources of accurate data in order to better predict rapidly changing and/or unpredictable market demands, and to find suitable exploitable land or property to be used for meeting the market demand. There is also a need to match such land or property with suitable operators of the land or property to exploit it for the purpose of meeting the market demand.

US Patent Application No. 2018/0144351 discloses a method of determining indices based on area-assigned data elements, and providing information regarding a market index to cause an action to be performed in association with a geographic area. However, existing market prediction and property or land matching models are not adequately adapted to address the specific technical problems inherent in property and land market matching, such as handling sparse and high-dimensional data, modeling complex spatio-temporal patterns, adapting to real-time market changes, efficiently ingesting diverse data types, and efficiently generating professional reports. Machine learning methods offer potential solutions to these technical challenges.

In particular, data imputation for missing micro-local data in a particular geographical region presents, for example, a significant technical challenge. Standard imputation methods may not capture the intricate relationships between variables in high-dimensional spaces. Moreover, demand forecasting under dynamic market conditions requires models capable of understanding temporal dependencies and spatial correlations, therefore capable of ingesting and learning from both temporal and spatial data.

Property suitability assessment involves analysing complex spatial data, including satellite imagery and geographic information systems (GIS) data. Processing such data efficiently and accurately may benefit from advanced machine learning techniques, such as convolutional neural networks (CNNs) and graph neural networks (GNNs).

Dynamic matching of market demand with suitable properties and operators benefits from employing adaptive algorithms, capable of learning from real-world feedback. Reinforcement learning (RL) provides a framework for such adaptive learning but defining appropriate reward functions and ensuring efficient policy optimization presents a technical challenge.

Additionally, the ingestion and formatting of diverse data types from various sources, such as multi-modal geospatial data including unstructured and semi-structured data, pose significant challenges. Efficiently processing this data to integrate it into analytical models benefits from advanced Al-driven data formatting techniques.

Generating professional reports that synthesize extensive data into coherent narratives is a complex task. Automating this process requires benefits from natural language generation techniques tailored to the real estate context.

An aim of the present invention is to prevent damage to local environments incurred by unsuitable commercial exploitation of those local environments, for example by taking into account multi-modal information and using suitable analysis thereof.

A further aim of the present invention is to prevent traffic congestion in urban environments incurred by commercial exploitation projects in those urban environments.

A further aim of the present invention is to automatically find suitable land or property for electric vehicle charging stations.

A further aim of the present invention is to maximize exploitation of electric vehicle charging stations, thus reducing the need for mining of crucial metals, like nickel, cobalt, and coltan, and the need for deforestation to access the nickel.

### SUMMARY

The present invention is defined by the features disclosed in independent claims. Additional embodiments are defined in the dependent claims.

According to some implementations, a computer-implemented method for predicting a market demand in a specific geographic region such as a city or a neighbourhood is provided, wherein responding to the market demand requires the exploitation of a property or a land in the specific geographic region, and for recommending at least one property or at least one land suitable for being exploited for the purpose of responding to the market demand, comprising the steps of: receiving and preprocessing a first multi-modal dataset and a second multi-modal dataset, wherein the first multi-modal dataset is known to be correlated with a market demand in the specific geographic region and wherein the second multi-modal dataset comprises at least spatial data, satellite image data, and land register data for a plurality of properties or a plurality of lands in the specific geographic region, to generate a preprocessed first multi-modal dataset and a second multi-modal dataset; predicting a market demand using spatio-temporal analysis of the preprocessed first multi-modal dataset, wherein a temporal analysis comprises using a recurrent neural network to analyse time-series data of a first mode of the preprocessed first multi-modal dataset, and wherein a spatial analysis comprises using a graph neural network (GNN) to analyse spatial data in a second mode of the preprocessed first multi-modal dataset; calculating a property suitability score or a land suitability score for each property or each land in the plurality of properties or plurality of lands in the land register data by combining results from convolutional neural network (CNN) analysis of satellite image data in a first mode of the preprocessed second multi-modal dataset and results from graph neural network (GNN) analysis of spatial data in a second mode of the preprocessed second multi-modal dataset; and recommending a plurality of optimal matches to a known list of operators for responding to the predicted market demand, wherein the plurality of optimal matches comprises property-operator pairs or land-operator pairs.

In embodiments, the computer-implemented method may further comprise acquiring a user feedback to integrate into a reinforcement feedback and continuous learning system to fine-tune a plurality of parameters of each of the neural networks of the computer-implemented method.

In some instances, the computer-implemented method further may comprise receiving a user input from a user of the computer-implemented method, wherein the user input comprises the specific geographic region for which a plurality of optimal matches should be returned.

The recurrent neural network of the computer-implemented method may comprise a long-short term memory network (LSTM) or a temporal convolutional network (TCN) in some embodiments of the invention.

In embodiments, the computer-implemented method further may comprise generating a report to apply for planning permission at a local authority to exploit at least one property or at least one land of the plurality of optimal matches recommended by the method.

The market demand may comprise a market demand for electric vehicle charging stations, a market demand for beds in a dedicated senior care facility, or a market demand for apartments in social housing in some instances.

In embodiments, preprocessing the first multi-modal dataset and the second multi-modal dataset may comprise performing natural language processing of each of the modes of the first multi-modal dataset and the second multi-modal dataset.

In some instances, the computer-implemented method further may comprise imputing a plurality of missing values from the preprocessed first multi-modal dataset and the preprocessed second multi-modal dataset using either a neural network for each of the modes of each dataset if the dataset size is greater than or equal to a configurable threshold, or a random forest regression model if the dataset size is below the configurable threshold, to generate an imputed first multi-modal dataset and an imputed second multi-modal dataset, after receiving and preprocessing the first multi-modal dataset and the second multi-modal dataset.

The time-series data of a first mode of the first multi-modal dataset may comprise a plurality of chronologically ordered records collected at defined intervals, for example daily, monthly, or yearly, and wherein each record of the plurality of chronologically ordered records comprises numeric and/or categorical variables indicative of demographic or resource usage metrics, and the time-series data may be configured to be fed into a recurrent neural network architecture for temporal analysis in some embodiments.

The spatial data of a second mode of the first or second multi-modal dataset may comprise at least one type of spatial data from the list comprising: coordinate-based polygon boundaries configured to represent land or administrative regions, for example stored in a shape file or equivalent; raster satellite imagery with georeferencing; adjacency relationships between regions, for example between local authorities sharing a boundary in some instances.

A list or a report comprising the plurality of optimal matches may be made public according to some embodiments of the invention.

In embodiments, recommending a plurality of optimal matches to a known list of operators for responding to the predicted market demand may comprise calculating a reward using a reinforcement learning framework for each property-operator pair or each land-operator pair given (i) the predicted market demand; (ii) the property suitability scores or land suitability scores for each property or each land in the plurality of properties or plurality of lands in the land register data, and (iii) the known list of operators, and generating the plurality of optimal matches as a list comprising the property-operator pairs or the land-operator pairs with the highest calculated reward.

According to some implementations, a system comprising at least one centralized computing unit, wherein the at least one centralized computing unit comprises one or more processors configured for carrying out the steps of a computer-implemented method for predicting a market demand is provided.

In some instances, the system may further comprise at least one client device configured for collecting a user input and a user feedback from a user of the system, and further configured to communicate the user input and the user feedback with the at least one centralized computing unit, wherein the one or more processors of the at least one centralized computing unit may be configured to analyse the user feedback and update, via a reinforcement feedback and continuous learning system, a plurality of parameters of each of the neural networks of the system.

The at least one centralized computing unit may be further configured to send a plurality of analysis results computed by the one or more processors to the at least one client device according to some embodiments of the invention.

### BRIEF DESCRIPTION OF THE FIGURES

The invention will be better understood through the detailed description of example embodiments and in reference to the Figures briefly described in this section.
Figure 1 provides a schematic overview of the steps of the computer-implemented method according to embodiments of the invention.
Figure 2 provides a schematic overview of an architecture of the system according to example embodiments of the invention.
Figure 3 provides a schematic overview illustrating modules of a detailed working example of the computer-implemented method according to example embodiments of the invention.
Figure 4 provides a schematic overview of an optional data-imputation step of the computer-implemented method according to embodiments of the invention.
Figure 5 provides a schematic overview of an interaction between a property matching algorithm and a reinforcement learning framework according to embodiments of the invention.

These and/or other aspects, features, and/or advantages will become apparent and more readily appreciated from the following description of various example embodiments, taken in conjunction with the accompanying drawings. Thicknesses of layers/elements, and sizes of components/elements, are not necessarily drawn to scale or in actual proportion to one another, but rather are shown as example representations. Like reference numerals may refer to like parts throughout the several views. Each embodiment herein may be used in combination with any other embodiment(s) described herein.

### DETAILED DESCRIPTION OF EXAMPLE EMBODIMENTS

The following detailed structural and/or functional description(s) is/are provided as examples only, and various alterations and modifications may be made. The example embodiments herein do not limit the disclosure and should be understood to include all changes, equivalents, and replacements within ideas and the technical scope herein. Hereinafter, certain examples will be described in detail with reference to the accompanying drawings. When describing various example embodiments with reference to the accompanying drawings, like reference numerals may refer to like components and a repeated description related thereto may be omitted.

### 1. MACHINE LEARNING OVERVIEW

Machine learning involves training models to perform specific tasks by learning patterns from data. Various types of machine learning frameworks can be employed, such as supervised learning, unsupervised learning, and reinforcement learning.

Neural networks consist of interconnected layers of nodes (neurons) that process input data and generate outputs. Deep learning utilizes neural networks with multiple layers, effectively handling complex data structures like images and time-series data.

Transfer learning allows models trained on one task to be adapted to another related task. This is particularly useful when dealing with sparse data, as knowledge from data-rich domains can be transferred to data-sparse domains.

Random forest regression models are ensemble learning methods that construct multiple decision trees during training and output the mean prediction of the individual trees. They are effective with smaller datasets and can handle high-dimensional data.

Automated Machine Learning (AutoML) techniques automate the process of applying machine learning to real-world problems. AutoML covers the complete pipeline from raw data to deployable machine learning models, optimizing model selection and hyperparameter tuning.

Reinforcement learning involves training agents to make decisions by maximizing cumulative rewards in an environment. Agents learn optimal policies through exploration and exploitation, adjusting their actions based on feedback from the environment.

The present invention provides a computer-implemented method and a system for autonomous property and land market matching using advanced machine learning techniques, and data processing and formatting, according to embodiments of the invention. The system according to embodiments of the invention may comprise at least one centralized computing unit comprising one or more processors configured for carrying out the steps of the computer-implemented method, and may further comprise connected client devices, implementing a client-server model or architecture. A working example according to embodiments of the invention may comprise several interconnected modules that address technical challenges in data ingestion, data imputation, demand forecasting, property suitability assessment, dynamic matching, and automated report generation.

### 2. COMPUTER-IMPLEMENTED METHOD

The present invention provides a computer-implemented method for predicting a market demand in a specific geographic region such as a city or a neighbourhood, wherein responding to the market demand requires the exploitation of at least one property or at least one land suitable for being exploited for the purpose of responding to the market demand, and for recommending at least one property or at least one land suitable for being exploited for the purpose of responding to the market demand.

A market demand may comprise, for example, a total quantity of a product or a service that consumers are willing and able to purchase at a given price within a specific market. A specific market may for example exist at a specific period of time in a specific geographic region. A market demand may vary over time, for example month-to-month or year-to-year, and may also vary from one specific geographic region to another, based on economic, environmental, and/or demographic factors. Fluctuations in market demand may be predictable or may be difficult to foresee, i.e., the total quantity of a product or service that consumers are willing and able to purchase may be known in advance, or may require advance estimation, for example based on data known to be correlated with a market demand.

Non-limiting examples of a market demand may comprise, for example, a market demand for a place or a bed in a healthcare facility such as dementia-care facility, mental health facility, or hospice in a given city; a market demand for infrastructure such as a greater quantity of electric vehicle charging stations or petrol stations in a given part of a city than currently exist; a market demand for a greater quantity of apartments in a geographic area than currently exist.

A property may comprise, for example, a building or buildings and the land belonging to it or to them, exploited for a commercial purpose or unexploited. A land may comprise, for example, an area of ground or earth exploited for a commercial or agricultural purpose or unexploited.

In non-limiting examples according to embodiments of the invention, responding to a market demand for a place or a bed in a healthcare facility may require the exploitation of a property such as a healthcare facility, i.e., a building or location providing access to healthcare such as hospitals, clinics, outpatient care centres, and specialized care centres. Responding to a market demand for a greater quantity of electric vehicle charging stations may require the exploitation of an unexploited plot of land, e.g., a small plot of land beside an existing road with enough space for several electric vehicle charging stations and a reliable connection to the electrical grid.

A specific geographic region may comprise a city, a neighbourhood, or may comprise government or authority defined geographic boundaries such as a geographical area corresponding to a postcode; a output area (OA) as in England or Wales or similar, i.e., the smallest census unit used in a country, often comprising roughly 100-700 residents; a lower layer super output area (LSOA) as in England or Wales, for example comprising 4-5 output areas and 1000-3000 residents each; middle layer super output area (MSOA) as in England or Wales, for example comprising 4-5 LSOAs and 5000-15000 residents; a local authority (LA) as in England, for example a district, borough, city, or unitary authority, comprising tens or hundreds of thousands of residents, a ward as in England or Wales, i.e., an electoral district within a local authority (LA), comprising 2000-20000 residents; or similar geographical districts as divided according to authorities in other countries; this information may in general be found on national land register websites.

A specific geographic region may comprise larger regions, for example an NHS Integrated Care Board (ICB), which in England are subnational National Health Service (NS) areas covering multiple local authorities or partial groupings thereof, comprising several hundred thousand to over a million residents and are used for integrated health-care planning.

Larger geographic regions such as entire swaths of countries, e.g., north west, south east, as well as country-level references, e.g. England, may be used for providing cost of living indexes, cross-regional analyses, and providing a reference to compute national averages (e.g., national median house price, occupancy rates) for comparisons with micro-local data such as that of an output area OA.

A specific geographic region may comprise, for example, a user-defined catchment area (CA) based on a user-defined "pin on the map" and an area around the pin on the map, e.g. an address, GPS coordinates, a single postcode or property, and a radius of for example 1 to 10 miles all around any one of the preceding "pins on the map," defining a geographic area, i.e., a catchment area CA, within which the user desires to perform analysis.

A catchment area CA may comprise for example several output areas OA if it was defined close to a border of an output area or has a large radius, therefore it may incorporate metadata for each of the higher layers of the output area, i.e., the layers within which the output area falls.

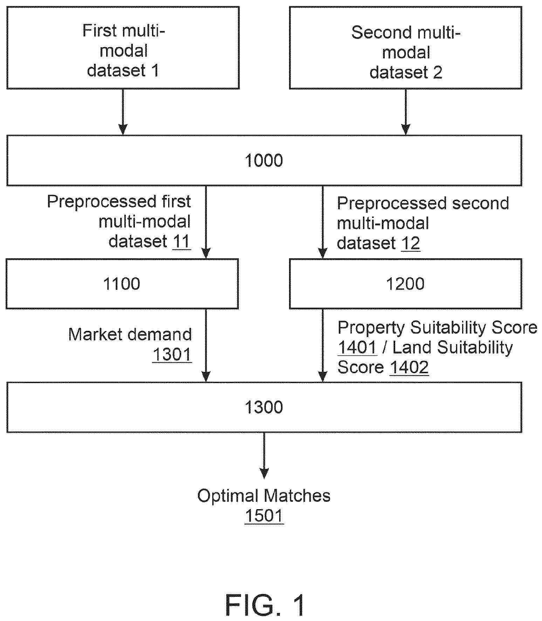

Referring to Fig. 1, a schematic of the computer-implemented method according to embodiments of the invention is shown.

With reference to Fig. 1, the computer-implemented method comprises in a first step 1000 receiving and preprocessing a first multi-modal dataset 1 and a second multi-modal dataset 2, wherein the first multi-modal dataset 1 is known to be correlated with a market demand 1301 in the specific geographic region and wherein the second multi-modal dataset 2 comprises at least spatial data, satellite image data, and land register data for a plurality of properties or a plurality of lands in the specific geographic region. This step may use for example natural language processing to output a preprocessed first multi-modal dataset 11 and a preprocessed second multi-modal dataset 12.

The first and second multi-modal datasets 1, 2 may comprise data captured in multiple different formats, e.g., text, images, audio, video. For example, the first multi-modal dataset 1 may comprise demographic statistics, economic indicators, and real-time market data, each known to be correlated with a market demand 1301. Integration of multiple formats and sources of data may reduce bias when estimating a quantity such as a market demand by taking into account the multiple formats and sources of data, rather than relying on only one source or format that may be inherently biased or erroneous.

The first multi-modal dataset 1 may comprise, for example, time-series data and spatial data, wherein time-series data comprises data collected over time intervals, either equally spaced time intervals or time stamped but not necessarily equally spaced. Time-series data may be stored as a matrix wherein each row or column corresponds to the data at one time stamp, and the remaining columns or rows comprise the variables at that time stamp. Spatial data comprise for example geographic or spatial information possibly using GPS coordinates and/or polygon data relating to boundaries of a given property or a given land. Spatial data may be stored as adjacency matrices or k-nearest neighbours graphs.

The second multi-modal dataset 2 may comprise, for example satellite image data and spatial data. The spatial data may be the same or may be different than that used in the first multi-modal dataset. Satellite image data may for example be found in publicly available data records, as will be explained later in examples.

Spatial data may comprise for example, geospatial data, i.e., time-based data that is related to a specific location on Earth's surface. Spatial data may, for example, be used to provide insides into relationships between variables and can reveal patterns or trends.

Geospatial data may comprise, for example, a location or position (for example GPS coordinates), satellite imagery data of the location or position, and time stamps or durations for each location and satellite image pair.

Both vector and raster geospatial data models may be used, and geospatial data may include an attribute table for providing additional information about the dataset.

Geospatial data may optionally comprise additional modes of data, including but not limited to weather data, environmental assessments including hydrography and elevation, and census data. The inclusion of weather data and environmental assessments may for example be useful for assessing a suitability of a property or a land to be exploited for a particular market demand.

For example, geospatial data may comprise location information (for example GPS coordinates on earth) and attribute information (characteristics of an object, event, or phenomena) with temporal information, such as a time stamp or life span for which the location and attribute information existed.

Land register data may comprise, for example, a list of properties or a list of lands from a relevant database or from user input, for example in the UK a relevant database may be the HM Land Registry, and many countries have similar land registers that comprise data relating to land and property registration, e.g., comprising property polygons for each registered property title. These property polygons may be identified by a title number which can link to further metadata comprising a property description, address, sale history, tenure type, restrictive covenants, easements, etc.

Both the first and second multi-modal dataset 1, 2 may comprise further modes of data than those described above. In addition, the first and second multi-modal datasets may be separated into a training set, a validation set, and/or a test set. The training set may be used to train machine learning models. The validation set may be utilized to validate results of trained machine learning models. The test set may be utilized to test operation of a trained machine learning model. There may be overlap in the data present in the first and second multi-modal datasets 1, 2.

Both the first multi-modal dataset 1 and the second multi-modal dataset 2 may be constructed from a variety of data formats, for example (1) structured data such as tabular data (CSV, Excel), SQL databases, NoSQL databases; (2) semi-structured data such as JSON, XML, and log files; and (3) unstructured data such as textual data, web pages, HTML content, PDFs and scanned documents, in addition to image data. Further details regarding the provision and formatting of the first and second multi-modal datasets 1, 2 will be given later.

In a second step 1100 shown in Fig. 1, the computer-implemented method comprises predicting a market demand 1301 using spatio-temporal analysis of the received preprocessed first multi-modal dataset 11, wherein a temporal analysis comprises using a recurrent neural network architecture to analyse time-series data of a first mode of the preprocessed first multi-modal dataset 11, and wherein a spatial analysis comprises using a graph neural network (GNN) to analyse spatial data in a second mode of the preprocessed first multi-modal dataset 11.

The recurrent neural network architecture used to analyse time-series data may be, for example, a long short-term memory network (LSTM) or a temporal convolutional network (TCN).

In a third step 1200 shown in Fig. 1 (which may be performed simultaneously, before, or after the step 1100), the computer-implemented method comprises calculating a property suitability score 1401 or a land suitability score 1402 for each property or each land in the plurality of properties or plurality of lands in the land register data of the preprocessed second multi-modal dataset 12 by combining results from convolutional neural network (CNN) analysis of satellite image data in a first mode of the preprocessed second multi-modal dataset 12 and results from graph neural network (GNN) analysis of spatial data in a second mode of the preprocessed second multi-modal dataset 12.

Finally, in a fourth step 1300 shown in Fig. 1, the computer-implemented method comprises recommending a plurality of optimal matches 1501 to a known list of operators for responding to the predicted market demand, wherein the plurality of optimal matches 1501 comprise property-operator pairs or land-operator pairs.

An operator may comprise any individual, organisation, or regulatory body who has the authority or may have the authority to operate, i.e., run or exploit, the at least one property or the at least one land for the purpose of responding to the predicted market demand.

For example, in the UK, the care quality commission (CQC) keep a registry of care operators who may have the authority to exploit a property, i.e., a healthcare facility, for the purpose of responding to a predicted increase in the market demand for the number of available beds for dementia care.

In general, a list of operators may be found in publicly available datasets, such as those maintained by the CQC or equivalent in other countries, or the Regulator of Social Housing datasets for social housing in the UK. In addition, a list of operators may be, for example, at least in part user-supplied, i.e., provided as an input by a user of the computer-implemented method or expanded based on historical behaviour.

Alternatively, an operator may refer to an individual or a company, and a list of operators may comprise those individuals or companies known to already exploit properties or lands in the specific geographic region concerned, for the purpose of responding to the same market demand or a similar market demand as the one predicted according to embodiments of the invention. For example, a list of operators may comprise a list of all companies running existing electric vehicle charging stations in a specific geographic region such as a city or neighbourhood or user-defined catchment area CA.

Each property-operator pair or land-operator pair may be formed from the known list of operators and each property or each land in the plurality of properties or plurality of lands in the land register data.

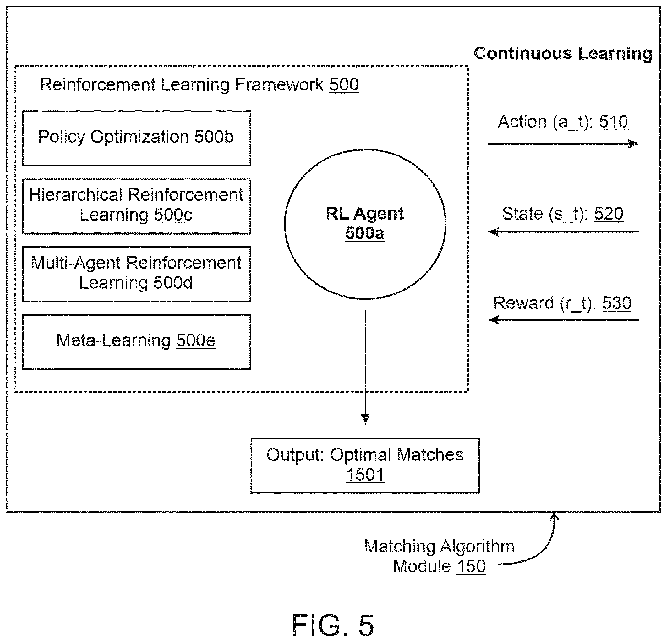

With reference to Fig. 5, recommending a plurality of optimal matches 1501 to a known list of operators for responding to the predicted market demand 1301 (known list of operators and predicted market demand 1301 not shown in Fig. 5) may comprise calculating a reward 530 using reinforcement learning, wherein a state 520 of a reinforcement learning agent 500a may comprise the predicted market demand 1301, a list of properties or a list of lands, and a predicted market demand, an action 510 of the reinforcement learning agent 500a may comprise choosing a property-operator pair or a land-operator pair for responding to the market demand 1301, and a reward 530 of the reinforcement learning agent 500a may comprise a success calculation of the property-operator pair or the land-operator pair minus a cost calculation of the property-operator pair or the land-operator pair.

In an entirely optional embodiment, the computer-implemented method may additionally comprise receiving feedback to integrate into an online training process for adapting parameters of the networks used to predict a market demand and calculate a property suitability score. The feedback may be provided for example by a user of the computer-implemented method.

In another entirely optional embodiment, the computer-implemented method may additionally comprise imputing a plurality of missing values in the first multi-modal dataset and the second multi-modal dataset, using either a neural network if the dataset sizes are greater than a configurable threshold or a random forest regression model if the dataset sizes are below a certain threshold.

In another entirely optional embodiment, the computer-implemented method may additionally comprise generating a report to apply for planning permission at a local authority for exploiting the recommended property or land for the purpose of responding to the predicted market demand.

These three optional embodiments, that is, the embodiment additionally comprising receiving feedback, the embodiment additionally comprising data imputation, and the embodiment comprising planning permission report generation, may all be added to the computer-implemented method according to the present invention, or only one of them may be added, or a combination of any two of the embodiments may be added, according to the desired implementation.

### 3. SYSTEM

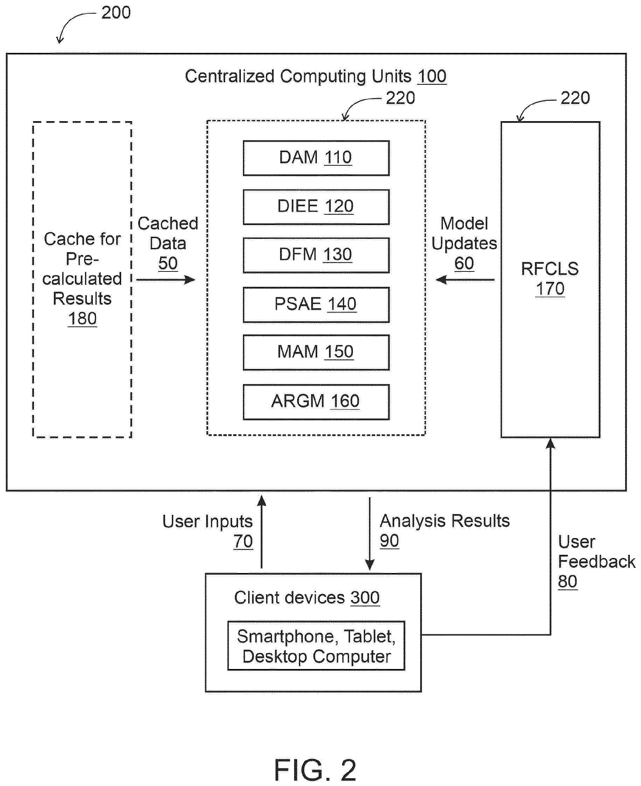

An exemplary embodiment of a system 200 configured for implementing the steps of the computer-implemented method according to embodiments of the invention is shown in Fig. 2.

With reference to Fig. 2, the system 200 comprises at least one centralized computing unit 100 (individually referred to as "centralized computing unit 100" and collectively as "centralized computing units 100"), wherein the at least one centralized computing unit 100 comprises one or more processors 220 configured for carrying out the steps of a computer-implemented method for predicting a market demand, wherein responding to the market demand requires the exploitation of a property or a land, and for recommending at least one property or at least one land suitable for being exploited for the purpose of responding to the market demand, comprising the steps of: receiving and preprocessing a first multi-modal dataset 1 and a second multi-modal dataset 2, wherein the first multi-modal dataset 1 is known to be correlated with a market demand in the specific geographic region and wherein the second multi-modal dataset comprises at least spatial data, satellite image data, and land register data for a plurality of properties or a plurality of lands in the specific geographic region, to generate a preprocessed first multi-modal dataset 11 and a second multi-modal dataset 12; predicting a market demand using spatio-temporal analysis of the preprocessed first multi-modal dataset, wherein the temporal analysis comprises using a recurrent neural network to analyse time-series data of a first mode of the preprocessed first multi-modal dataset, and wherein a spatial analysis comprises using a graph neural network (GNN) to analyse spatial data in a second mode of the preprocessed first multi-modal dataset; calculating a property suitability score or a land suitability score for each property or each land in the plurality of properties or plurality of lands in the land register data by combining results from convolutional neural network (CNN) analysis of satellite image data in a first mode of the preprocessed second multi-modal dataset and results from graph neural network (GNN) analysis of spatial data in a second mode of the preprocessed second multi-modal dataset; and recommending a plurality of optimal matches to a known list of operators for responding to the predicted market demand, wherein the plurality of optimal matches comprises property-operator pairs or land-operator pairs.

As shown according to the exemplary embodiment of Fig. 2, the at least one centralized computing unit 100 comprises one or more processors 220 configured for carrying out the artificial intelligence and machine learning operations according to embodiments of the invention.

According to a non-limiting example embodiment of the invention shown in Fig. 2, the one or more processors 220 of the at least one centralized computing unit 100 may, for example, be configured to host core machine learning modules, for example comprising the DIEE 120, DFM 130, PSAE 140, MAM 150, ARGM 160, and RFCLS 170, which will be further explained in a following section, "4. Example Technical Implementation".

The one or more processors 220 may be one or more graphical processing units (GPUs), central processing units (CPUs), microprocessors, microcontrollers, field-programmable gate arrays (FPGA), an application specific integrated circuits (ASIC), or another type of processing component.

Each "processor" herein includes processing circuitry, and/or may include multiple processors. For example, as used herein, including the claims, the term "processor" and "computing unit" may include various processing circuitry, including at least one processor, wherein one or more of at least one processor, individually and/or collectively in a distributed manner, may be configured to perform various functions described herein. As used herein, when "a processor", and "one or more processors" are described as being configured to perform numerous functions, these terms cover situations, for example and without limitation, in which one processor performs some of recited functions and another processor performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

Referring still to Fig. 2, the system 200 may optionally comprise at least one client device 300, for example comprising one or more devices capable of receiving, generating, storing, processing, and/or providing information, such as feedback information described herein, and configured for communicating with the at least one centralized computing unit 100.

The at least one client device 300 (individually referred to as "client device 300" and collectively referred to as "client devices 300") may comprise for example user or research devices, such as smartphones, tablets, laptops, and/or desktop computers, as well as wearable communication devices, configured to collect user inputs 70, such as catchment areas for suitable property searches and preferences or constraints, such as property type of environmental considerations or constraints, and user feedback 80, e.g., interaction data, and feedback based on previously found real-world matches.

The at least one client device 300 may receive information from and or send information to the at least one centralized computing unit 100. The at least one client device 300 may optionally be configured to collect data inputs in real-time and display outputs such as property recommendations, market insights, and generated reports.

The at least one centralized computing unit 100 may be configured for communicating with, i.e., receiving information from or sending information to, the at least one client device 300, for example via a wired or wireless connection or a combination of wired and wireless connections, for example over a cellular, Internet, telephone, or ethernet network.

For example, according to exemplary embodiments of the invention, the at least one client device 300 may provide the core machine learning modules, for example a Data Acquisition Module (DAM) 110, with user inputs 70 comprising catchment areas and user preferences, and provide an Reinforcement Feedback and Continuous Learning System (RFCLS) 170 with user feedback 80, interaction data, and previously calculated real world matches, via its connection with the at least one centralized computing unit 100.

The at least one centralized computing unit 100 and the at least one client device 300 may therefore exhibit a client-server model in which the at least one client device 300 may request the at least one centralized computing unit 100 to perform computationally intensive operations such as big data processing and model training. The at least one client device 300, for example via an interactive software application, may provide user input 70 and user feedback 80 to the at least one centralized computing unit 100 when requesting the at least one centralized computing unit 100 to perform computational operations. In addition, the at least one client device 300 may receive analysis results 90 from the at least one centralized computing unit 100, which may be displayed or provided to a user of the client device 300, for example in a software application running on the client device 300.

For example, according to embodiments of the invention, the at least one client device 300 may be configured to submit requests to the at least one centralized computing unit 100 and may display analysis results provided by the at least one centralized computing unit 100, for example using a software application running on the at least one client device 300.

The at least one centralized computing unit 100 may optionally comprise at least one digital storage device, for example a cache memory 180 as shown in Fig. 2 for storing pre-calculated results according to exemplary embodiments of the invention. For example, as shown in Fig. 2, the cache 180 may store pre-calculated results, e.g., forecasts for a well-known region or standard catchment areas, and may transfer the pre-calculated results as cached data 50 to the one or more processors 220 configured for carrying out the artificial intelligence and machine learning operations according to embodiments of the invention via a bus or other communication scheme.

Referring still to Fig. 2, a system 200 comprising a server-device or client-server architecture is shown according to embodiments of the invention, with data-flow indicated by arrows and further including incorporating results from a Reinforcement Feedback and Continuous Learning System (RFCLS) 170, which will be further explained in a following section. As seen in Fig. 2, the server-device architecture comprises several components including at least one centralized computing unit 100 and client devices 300.

Regarding the flow of data in the system 200, the at least one client device 300 may for example be configured to request analysis for a specific catchment area, and a program running on the at least one centralized computing unit 100 may check if results are already cached in the cache 180. If cached, results may be retrieved and sent to the at least one client device 300 immediately. If not cached, the one or more processors 220 may be configured to perform the requested computations to obtain the requested analysis, cache the results for future requests, and send the computed analysis to the at least one client device 300. In this way, the system 200 supports finding results for user-defined geographic areas, ensuring personalized and local, precise analysis.

In addition, the system 200 may use spatial indexing and geospatial databases to reduce the amount of time necessary to access relevant data for any user-defined area, and data may be partitioned and indexed to optimize query performance.

The system 200 may optionally incorporate reinforcement learning integration by providing a Reinforcement Feedback and Continuous Learning System (RFCLS) 170, as shown in Fig. 2. The implementation of the RFCLS 170 will be explained further in a following section. User interactions or user input 70 and user feedback 80 may, for example, be collected via the at least one client device 300 and sent to the centralized computing unit 100 to be directed to the RFCLS 170 for processing the feedback data to update models via model updates 60 in near real-time, ensuring the computer-implemented method for predicting a market demand and recommending a property or a land incorporates up-to-date data without requiring complete retraining.

In this way, the server-device architecture of the at least one centralized computing unit 100 and the at least one client device 300 ensure that computationally expensive operations and model training may be performed using the at least one centralized computing unit 100, while user feedback 80 may be integrated into model training via collection using the at least one client device 300 and communication of the user feedback 80 from the client device 300 to the RFCLS 170 running on the at least one centralized computing unit 100, as shown in Fig. 2.

The server-device architecture of the system 200 has several technical advantages, including resource optimization and efficient computation. By caching and reusing computations, the system 200 minimizes resource usage while maintaining high performance. In addition, the modular nature of the server-device architecture of the system 200 ensures that it may handle a large number of users and requests simultaneously without degradation in performance.

The number and arrangement of devices shown in Fig. 2 are provided as non-limiting examples. In embodiments, there may be different numbers and arrangements of devices than that shown in Fig. 2.

### 4. EXAMPLE TECHNICAL IMPLEMENTATION

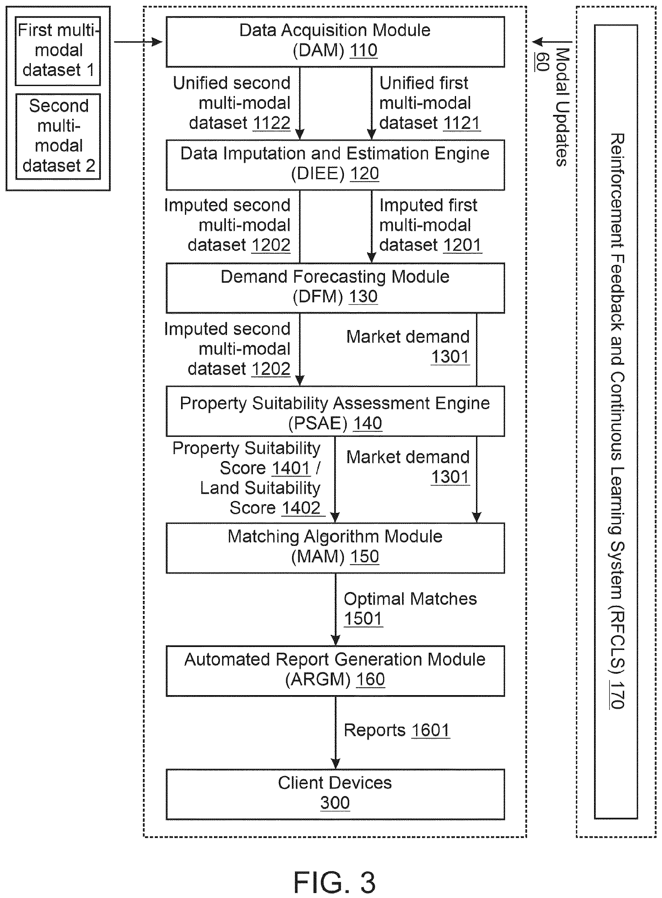

Referring to Fig. 3, an exemplary technical implementation of the computer-implemented method according to embodiments of the invention is provided, in which modules or computation engines are used as an illustration of a way of carrying out the invention. The exemplary technical implementation is given as an example only, and in practice other technical implementations may be used for carrying out the invention. The number and arrangement of the modules in Fig. 3 are provided as an example. Additionally, or alternatively, a set of modules and/or computation engines may perform one or more of the computations described as being performed by another set of modules and/or computation engines.

### Dementia Care Demand Example

In the UK, demand for dementia-care beds in senior facilities may appear correlated with Attendance Allowance (AA) data from the Department for Work and Pensions (DWP). Higher-rate AA typically reflects individuals needing 24-hour care, while lower-rate AA reflects milder dementia care needs. However, multiple factors complicate the direct usage of AA figures as a perfect stand-in for real dementia-care demand, including (i) local wealth bias whereby in affluent areas, families may self-fund elderly care without bothering to claim AA, leading to underreported severe dementia cases; (ii) household structure whereby certain communities or inter-generational households may continue caring for seniors with dementia at home, resulting in fewer official claims for institutional care; (iii) socio-economic variation whereby demographic patterns, e.g., income, saving rates, education may modulate how and when seniors transition to specialized facilities. Consequently, raw AA counts alone may yield incomplete or biased pictures of bed demand.

As an example, Attendance Allowance data (AA) from the UK Office for National Statistics (ONS) and the Department for Work and Pensions (DWP) may be leveraged. This data indicates how many people in each local authority receive AA due to severe dementia, distinguishing higher-rate AA (indicative of full-time 24-hour care needs) from lower-rate AA (indicative of daily assistance needs). By aggregating and weighting these figures at microregional levels, we can estimate local demand for care-home beds.

Furthermore, by drawing a custom catchment area (e.g., pinning a point on a UK map and drawing a radius that overlaps multiple local authorities), total dementia prevalence in that region or custom catchment area may be proportionally inferred. To enhance accuracy, population-by-age-group data (and projected growth thereof) may be integrated to reflect local demographics. Additional data points from NHS or hospital records, which may be available only for certain local authorities, can further fine-tune the model by enriching the dementia-prevalence estimates in regions where the basic AA data might be insufficient.

### Local Ground-Truth Data Collection

To address these biases, additional ground-truth data from local waiting lists (municipal or private care-home lists), NHS facility waiting lists, smaller-scale research surveys, or local community records can be incorporated (in a dementia-care example). For instance, a single local authority may publish weekly bed-availability or waitlist figures, while a private care chain might share monthly occupancy metrics and admission requests. Although these sources tend to be region-specific, they offer true demand signals that can fill the gaps left by official DWP data.

According to an example embodiment of the invention shown in Fig. 3, a Data Acquisition Module (DAM) 110 (explained below) preprocesses first and second multi-modals datasets 1 and 2 to translates these smaller or "micro" datasets into a unified format, as explained below. Once ingested, these local or facility-level data points serve as training examples, enabling the predictive models to correct potential biases from over-reliance on higher-rate vs. lower-rate AA alone.

### Data Acquisition Module (DAM) 110

According to embodiments of the invention, a data acquisition model (DAM) 110 as shown in Fig. 3 may receive first multi-modal dataset 1 and second multi-modal dataset 2 and perform data preprocessing, by performing natural language processing, on the first and second multi-modal datasets 1, 2, to generate unified first multi-modal dataset 1121 and unified second multi-modal dataset 1122. First and second multi-modal datasets 1, 2 may comprise demographic data, land register data, property records, environmental assessments, satellite imagery, economic indicators, market data, etc. There may be overlap in the data of the first and second multi-modal datasets 1, 2.

The DAM 110 may collect and preprocess data from various sources, utilizing a data formatting model that allows for the ingestion of diverse data types, including structured, unstructured, and semi-structured data.

For example, DAM 110 may comprise a preprocessing pipeline combining (a) optical character recognition (OCR) or table extraction using for example Azure Document Intelligence or an equivalent library and (b) natural language processing (NLP) classification, using for example HuggingFace BERT or Azure AutoML, to parse unstructured PDFs/HTML. For example Azure AutoML with Multilingual BERT may be used to perform text classification and named-entity recognition. Alternatively, it would be possible to use open-source frameworks like transformers (Hugging Face) plus spacy for entity detection or recognition.

The DAM 110 may identify text fields or variables like "beds_granted" or "attendance_allowance_higher_rate" and map them to a standardized schema. For structured CSV/JSON data, pandas or PySpark may be used to unify columns into the same schema. If a field is not recognized or DAM confidence is low, the DAM 110 may raise a flag for a confirmation or edit from a user.

The above-mentioned standard libraries are in general pre-trained on large corpora, then using the data acquisition module 110 may be fine-tuned on domain-specific examples and data in the first and second multi-modal datasets 1, 2 (e.g. planning documents, sector reports). In this way, the first and second multi-modal datasets may be integrated via Python libraries (pandas/PySpark) into a unified format. The data acquisition module 110 according to an exemplary embodiment of the invention may therefore reduce resources (e.g., processing or memory resources).

The data acquisition module (DAM) 110 may automatically ingest data from structured APIs (CSV, JSON) or unstructured PDFs by analysing textual contents, cross-referencing user-supplied metadata (e.g., 'this is a planning permission report'), and classifying relevant fields, such as variables representing the number of beds granted or attendance allowance higher rates (e.g., variables 'beds_granted' or `attendance_allowance_higher rate'), using a suitable data ingestion library, for example pandas provides an open source data analysis tool which may be configured to ingest data from both structured APIs and unstructured PDFs.

Referring to Fig. 3, the data acquisition module 110 may then transform these fields into a standardized schema (e.g. unify coordinate systems such as OSGB36 / British National Grid for the UK), creating a unified first multi-modal dataset 1121 and unified second multi-modal dataset 1122, with columns for numeric attributes, categorical indicators, date/time indices, and optional label columns (e.g., known demand shortfalls). This standardization ensures the subsequent DFM 130, PSAE 140, and MAM 150 modules receive consistent input and allows the method to handle a variety of modes of data.

The format of the unified multi-modal datasets 1121, 1122 may comprise, for example, a tabular structure with columns for numeric, categorical, spatial variables or references, plus optional "label" columns (like true_demand) for entries for which labels are available, as shown below.

An example ingestion and preprocessing for structured data from an API, for example, attendance allowance (AA) from the DWP using the Stat X API comprises the DAM 110 calling the Stat X API at each quarter, retrieving new rows of data in CSV or JSON format, wherein the data is partly available at output area level (some data rows may be incomplete) and fully at local authority and region level. Pandas could read the CSV/JSON into memory, and map the data to defined canonical fields, e.g., "attendance_allowance_higher_rate" (needs full-time care), "disabilityType" (e.g. "Dementia"), "geoCode" (OA/LA/Region). The data rows associated with the new quarter could be merged into the unified multi-modal datasets, for example as below:

| **TimeInter** | **Year** | **GeoType** | **GeoCode** | **Measure** | **Value** |
|---|---|---|---|---|---|
| **2023-Q1** | 2023 | OA | E00094642 | attendance_allowance_higher_rate | 9 |
| **2023-Q1** | 2023 | LA | E06000052 | attendance_allowance_higher_rate | 2,199 |
| **2023-Q1** | 2023 | Region | E12000009 | attendance_allowance_lower_rate | 67,011 |
| ... | ... | ... | ... | ... | ... |

An example ingestion and preprocessing for unstructured data in the form of a user-uploaded PDF, for example a Knight Frank Market Report, may comprise applying a PDF parser to obtain raw text and any embedded tables, and running the text through an NLP and classification pipeline, for example trained on Multilingual Bert for named-entity recognition. For example, text "88.3% occupancy overall" or "£1,182 weekly fee" may be captured, corresponding to fields, "occupancy_overall," "avg_weekly_fee_overall," etc. The module may guess data is for geoCode=K020000001 (UK) only, since a report may be a national-level average, for example. The module may highlight newly extracted fields, letting a user of the module accept or edit them, and if accepted, they could become new data rows in the unified multi-modal datasets:

| **Measure** | **Categories** | **GeoCode** | **2020** | **2021** |
|---|---|---|---|---|
| resident_to_staff | [care_staffing, care,labour] | K02000001 | 1.3 | 9 |
| staff_to_resident | [care_staffing, care,labour] | K02000001 | 0.8 | 0.8 |
| resident_to_staff_nursing | [care_staffing, care,labour] | K02000001 | 0.8 | 0.9 |
| ... | ... | ... | ... | ... |

A further example comprises fetching a local authority's updated local plan, since in general local authorities publish a new plan every few years, for example every five years. The module may fetch the plan's geographic boundaries from a structured JSON, or in the UK the "planning.data.gov.uk" API, for example. The textual portion may be parsed with NLP, looking for keywords like "Elderly", "C2," "Extra Care," "Residential," "Nursing", "parking," etc., and the final numeric and textual descriptors may be stored.

Therefore, upon ingestion, the DAM 110 may classify the data by assigning metadata, which includes information about the data category, format, and relevance. This classification advantageously enables the system to understand how to process and integrate the data into the unified multi-modal datasets 1121 and 1122.

The DAM may format and standardize the data, converting it into a compatible structure for processing by the subsequent modules. This may comprise for example first parsing and extracting information including for example identifying key data fields, extracting relevant information from unstructured data, i.e., first and second multi-modal datasets 1, 2, using natural language processing (NLP) techniques, data transformation techniques comprising converting data types and units, and optionally normalising values to a standard scale to generate data with a unified format, i.e., unified first and second multi-modal datasets 1121, 1122.

Data preprocessing may comprise for example a preprocessing step comprising (1) cleaning including removing inconsistencies and errors from the data, (2) normalization including scaling features to a standard range to ensure consistency, and (3) integration including merging disparate data types into a unified multi-modal datasets 1121 and 1122.

As a further non-limiting example of a usage of the DAM 110 given for illustrative purposes only, a data analyst may upload a dataset containing market trends extracted from various industry reports in PDF format. The DAM 110 may process these documents, extract the necessary information using NLP, classify the data under "Market Trends," and formats it into a structured format suitable for analysis.

As shown in Fig. 3, this data may then be integrated into unified multi-modal datasets 1121, 1122 for use by a demand forecasting module (DFM) 130 and a property suitability assessment engine (PSAE) 140 (or for optional intermediate use by a data imputation and estimation engine (DIEE) 120), which will be further explained below.

The data receiving and preprocessing step, including the receiving of first and second multi-modal datasets enhances flexibility of the computer-implemented method.

### Data imputation and estimation engine (DIEE) 120

According to embodiments of the invention demonstrated in Fig. 3, a Data Imputation and Estimation Engine (DIEE) 120 may be used to perform an optional missing data imputation step of the computer-implemented method, for example if data is missing from the unified first and/or second multi-modal datasets 1121, 1122.

As shown in Fig. 3, the DIEE 120 may, for example, receive at its input unified multi-modal datasets 1121 and 1122 from the DAM 110. However, despite their unified format, certain values may be missing in the unified datasets, as shown below.

The DIEE 120 may then utilize neural network architectures, random forest regression models, and automated machine learning (AutoML) techniques to estimate missing micro-local data, and produce imputed first multi-modal dataset 1201 and imputed second multi-modal dataset 1202 at its output, as shown in Fig. 3, to pass on to a demand forecasting module 130. The engine 120 may employ domain adaptation and few-shot learning to handle sparse and high-dimensional datasets effectively.

Micro-local data scarcity impedes precise market analysis due to incomplete or missing data at granular geographic levels. Standard imputation methods may not effectively capture complex relationships in high-dimensional data.

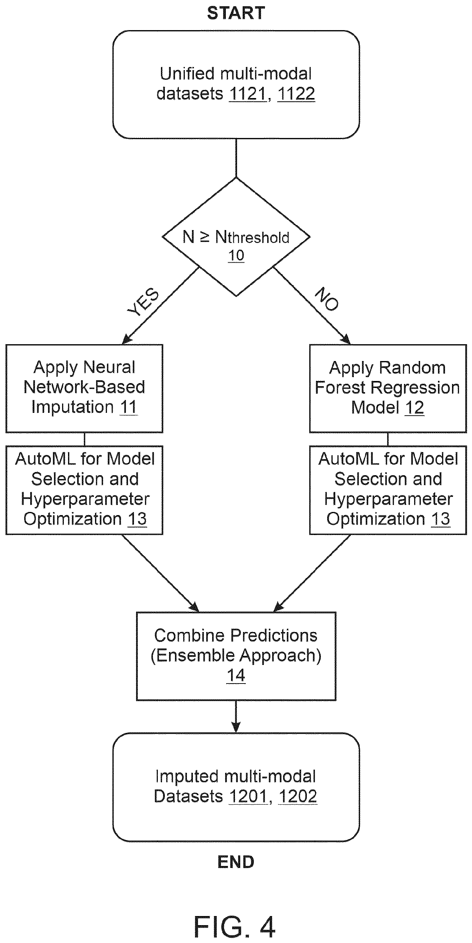

As shown in the decision flow diagram of Fig. 4, the DIEE 120 may employ the following decision flow based on the sizes of the unified first and second multi-modal datasets 1121, 1122, i.e., number of data samples in each dataset, received at its input.

According to criterion 10 of Fig. 4, if *N* ≥ *N_{threshold}* is satisfied, the DIEE 120 may use neural network-based data imputation 11 before applying AutoML for model selection and hyperparameter optimization 13.

If dataset size criterion *N* ≥ *N_{threshold}* 10 is not satisfied, then the DIEE 120 may apply random forest regression models 12 before applying AutoML for model selection and hyperparameter optimization 13.

The threshold *N_{threshold}* may be determined empirically based on model performance metrics and computational efficiency. Suitable initial values for *N_{threshold}* may be, for example 5000-10000. This range is based on cross-validating mean-square error (MSE) or mean absolute error (MAE) for micro-local data. The range for initial values is given as an example only and other values may also work, however, a value around 5000 may be typical as a lower bound for neural networks, though this threshold may change in the future and differ for different tasks.

According to optional embodiments of the invention and as shown in Fig. 4, automated Machine Learning (AutoML) techniques 13 may be used to advantageously automate model selection and hyperparameter optimization for both data imputation neural networks and random forest models. Auto-Sklearn, for example, is a publicly available library implementing automated machine learning techniques such as automatically searching for the optimal learning algorithm for a new dataset and optimizing hyperparameters.

The AutoML process according to the equation below considers a predefined set of algorithms Mand hyperparameters H, searching for the optimal combination that minimizes the validation loss: $\left(M*,H*\right) = {argmin}_{M ∈ M , H ∈ H} {L}_{validation} \left(M, H\right) ,$ where:
*L_{validation}* is the validation loss;
*M* includes models such as feedforward neural networks, LSTMs, and random forests;
H includes hyperparameters like learning rates, tree depths, and regularization terms.

AutoML assists in selecting the optimal model and hyperparameters regardless of the dataset size, enhancing the decision flow by:
- Fine-tuning neural networks when *N* ≥ *N_{threshold}.*
- Optimizing random forest models when *N < N_{threshold}.*
- Balancing between model complexity and overfitting.

When each of the datasets 1121, 1122 is sufficiently large (criterion 10 of Fig. 4 satisfied), the DIEE 120 utilizes neural network-based data imputation 11, which may handle sparse and high-dimensional datasets, as explained below.

Let *θ_{source}* be the parameters of a neural network model trained on data-rich regions. According to embodiments of the invention, the neural network model may be adapted to the target region by minimizing the loss function according to embodiments of the invention as below: ${L}_{target} \left(θ\right) = \frac{1}{N} {\sum }_{i = 1}^{N} l \left({y}_{i},f\left({x}_{i}; θ\right)\right)$ where:
ℓ is the loss function (e.g., Mean Squared Error);
*yᵢ* are the true values for a target-region;
*xᵢ* are the target-region specific inputs,
*θ* are the model parameters initialized with *θ_{source}.*

In this way, the neural network architecture according to embodiments of the invention advantageously provides domain adaptation of micro-regional data.

An example of a usage of neural network data imputation could be for estimating missing household income data in a micro-local area using a neural network pre-trained on national census data.

According to embodiments of the invention, when the size of each dataset 1121, 1122 is small (*N* < *N_{threshold}*), i.e., criterion 10 of Fig. 4 not satisfied, random forest regression models 12 may be used due to their robustness with limited data, with the mathematical formulation as shown below. Sci-kit learn provides for example an open-source random-forest regression architecture for data imputation, the fundamentals of which are explained below.

Prediction Function: $\hat{y} = \frac{1}{B} {\sum }_{b = 1}^{B} {f}_{b} \left(x\right)$ where:
*f_{b}*(*x*) is the prediction of the b-th decision tree.
*B* is the total number of trees, for example, initially set in a preferred range between 64-128 trees though initial numbers of trees outside this range may also be used. The exact number of trees may optionally be tuned using AutoML 13 as explained above or cross-validation.

The training process may comprise, for example, the following steps:
Bootstrap Sampling: For each tree b, draw a bootstrap sample D_b from the training data.

Random Feature Selection: At each node, select m features at random, for example 5-10 features, ensuring decorrelation among trees, (where *m* < *M,* and *M* is the total number of features, e.g. 20-50 features in total).

Tree Growth: Grow each tree to its maximum depth, for example, 5-10, without pruning.

Loss Function: $L \left(θ\right) = \frac{1}{{N}_{total}} {\sum }_{i = 1}^{{N}_{total}} {\left({y}_{i}-{\hat{y}}_{i}\right)}^{2}$ where:
*Nₜₒₜₐₗ* is the total number of training samples.
*θ* represents the parameters of all trees in the forest.

An example usage of random forest regression models for data imputation could be imputing missing property valuations using random forest models trained on similar properties in nearby areas. This kind of micro-local data usually has small size, so the random forest regression model would be better suited to data imputation than the neural network.

As shown in Fig. 4, the DIEE 120 may also perform a combine predictions step 14 from both neural network-based imputation 11 and random forest regression model 12 to enhance accuracy, according to the following ensemble approach in a non-limiting example embodiment of the invention: ${\hat{y}}_{final} = {w}_{NN} {\hat{y}}_{NN} + {w}_{RF} {\hat{y}}_{RF}$ where:
*w_{NN}* and *w_{RF}* are weights assigned based on model confidence or validation performance.

The DIEE 120 may then produce at its output imputed first multi-modal dataset 1201 and imputed second multi-modal dataset 1202, to be provided as input to the demand forecasting module 130 and to the property suitability assessment engine 140 according to embodiments of the invention shown in Fig. 3.

The DIEE 120 improves data accuracy by effectively estimating missing values using appropriate models based on data size, utilizing AutoML for optimal model and hyperparameter selection, combining predictions to capture diverse data patterns, and providing robustness and efficiency in data imputation.

The implementation of the DIEE 120 according to example embodiments of the invention provides the added advantage of giving the computer-implemented method more flexibility to handle varied kinds of datasets.

### Demand forecasting module (DFM) 130

As shown in Fig. 3, a demand forecasting module (DFM) 130 may be used, for example, to predict a market demand 1301 using spatio-temporal analysis of the acquired first multi-modal dataset, or of the unified datasets 1121, 1122 (or the imputed datasets 1201, 1202, if the data imputation and estimation engine 120 was used according to embodiments shown in Fig. 3).

The DFM 130 may, for example, employ deep learning models, such as Long Short-Term Memory (LSTM) networks, Temporal Convolutional Networks (TCNs), and Graph Neural Networks (GNNs), for time-series and spatio-temporal forecasting. Custom loss functions and attention mechanisms may be integrated to enhance predictive capabilities and align with development project objectives.

Hurdles to accurate prediction of market demand 1301 include dynamic market conditions that benefit from modeling complex temporal and spatial patterns for accurate demand forecasting. Traditional models may fail to capture non-linear dependencies and interactions between variables.

An explanation of demand forecasting or demand prediction according to embodiments of the invention will be provided below. A general overview will be first given, followed by a detailed working example.

### Demand Forecasting Module (DFM) Overview

The DFM 130 may comprise, for example a time-series aspect and a spatial aspect. The time-series aspect may comprise, for example, an LSTM or TCN, and the spatial aspect may comprise, for example a GNN.

Concerning the time-series aspect, the LSTM portion may ingest time-series data in a first mode of the first multi-modal dataset, for example in a first mode of the unified first multi-modal dataset 1121, comprising historical monthly or yearly statistics, for example from 2002 to current year/month, or any available range. The system then learns temporal patterns such as year-over-year growth in dementia prevalence or economic and demographic statistics.

Statistics may comprise, for example, monthly attendance allowance stats (higher vs. lower rate), population by age group, and local waitlist data. Internally, if x*ₜ* is the feature vector at time t, the LSTM updates hidden/cell states (*hₜ, cₜ*) with the usual gating equations, as will be further explained below.

Concerning the spatial aspect, in embodiments of the invention, the DFM 130 may also process a graph of local authorities, for example a graph structure representing local authorities in a second mode of the first unified multi-modal dataset 1121, where edges of the graph structure may represent adjacency (e.g., shared boundaries) or proximity within X kilometers, for example. The graph and adjacency matrix may be fed into a GNN, enabling spatial correlation modelling (neighbouring authorities often exhibit similar trends).

Concerning the training data and its labelling, direct data may be combined from certain areas where real "ground-truth" prevalence is tracked, as explained previously. This incorporation of multiple data sources advantageously helps reduce bias in market demand prediction caused by relying on only one kind of data, for example Attendance Allowance in a dementia-care situation. For example, one known source of bias in predicting a market demand for number of beds in a dementia-care facility is that in more wealthy regions, fewer people apply for AA, even though they may be eligible for it. The label in this example could be a "true_bed_shortage" or "true_prevalence_rate" derived from care-home waitlists or local research.

An optional attention mechanism may weight certain timesteps or neighbour nodes more strongly if historical data or adjacency indicates a pattern.

According to an example, non-limiting embodiment of the invention, the final predicted market demand 1301 or market forecast is obtained by concatenating or fusing the LSTM's hidden state vector with the GNN's spatial embedding and passing it through a final multi-layer perceptron layer. Predicted forecasts are compared with available true forecasts via a loss function which is used to adjust parameters of the models used for the time aspect and spatial aspect.

### Demand Forecasting Module (DFM) Working Example

As explained above and shown in Fig. 3, the demand forecasting module (DFM) 130 may be used for predicting a market demand 1301 using spatio-temporal analysis of an acquired multi-modal dataset.

According to various embodiments, the DFM 130 may integrate:
1. Time-series modelling via Long Short-Term Memory (LSTM) or other recurrent neural networks (e.g., Temporal Convolutional Networks);
2. Spatial modelling via Graph Neural Networks (GNNs) to capture adjacency or proximity relationships between properties;
3. Optional attention mechanisms to emphasize important timesteps or regions, and
4. Custom loss functions to align with development project objectives (e.g., heavier penalties on underestimation).

Below will be detailed (A) the input data format and labelling, (B) how each mode is fed to the LSTM/GNN, (C) how predictions are combined, (D) Attention & Custom Loss, (E) variables used in the LSTM, GNN, and attention equations, and (F) typical architectures, according to an example embodiment of the DFM 130 part of the invention.

### (A)Nature of the input data

According to embodiments of the invention, input data to the demand forecasting module may comprise time-series data in a first mode and spatial data in a second mode of a unified first multi-modal dataset 1121, for example as ingested and formatted by the data acquisition module (DAM) 110, and optionally imputed by the data imputation and estimation engine (DIEE) 120 (in which case the input to the DFM 130 comprises time-series data in a first mode and spatial data in a second mode of an imputed first multi-modal dataset 1201, as shown in Fig. 3).

The time-series input typically comprises a format of monthly or yearly CSV/Excel rows (or API/DB entries). An exemplary, non-limiting list of variables for each timestamp of the time-series data for a dementia-care example comprises: local authority identification number, attendance allowance higher rate (number of severe dementia cases), attendance allowance lower rate (number of mild dementia cases), population 65 and older, population 85 and older, dementia care beds, e.g., existing capacity, private dementia care beds, private carers, household size, gross household income, saving rate, education level, year or month timestamp, and for example finishing with a ground-truth market demand label, e.g., actual measured bed shortage label.

For an EV-charging market demand prediction, an exemplary, non-limiting list of variables for each time-stamp of the time-series data comprises: daily logs of station usage or substation capacity, and a true demand label may be provided shortfall, e.g. peak usage that went unmet.

Each row in the dataset, e.g., for each timestamp t, may optionally comprise a ground-truth demand metric (e.g., actual measured bed shortage, peak usage that went unmet), stored in a "label" column for training. As mentioned, time-series data are typically provided as CSV or from an API, each row having a timestamp and relevant variables. A "label" column may store measured/actual demand when available.

The spatial input may be provided as a matrix or graph specification (node/edge lists+node features), wherein each node of the graph represents a local authority or region. The format may be, for example, a graph adjacency matrix A (e.g., boundary-sharing among local authorities) or a distance matrix having dimensions N × N for a graph with N nodes, e.g., N properties. A node feature matrix S may comprise for example each node v having a feature vector s*ᵥ*, comprising regional-level attributes, e.g., household size, environment flags, local budgets, etc.

The time-series data may be provided as input to the LSTM ${\left\{{x}_{t}\right\}}_{1}^{T}$ while the spatial data comprising node feature matrix S (N × number of features), e.g. local authority polygons or property adjacency, and graph adjacency matrix A may be provided as input to the GNN. The adjacency relationships are derived from whether local authorities share a boundary, or from whether a property is near another in terms of distance.

### (B)Feeding data to LSTM and GNN

For each timestamp t, the DAM 110 may provide a feature vector x*ₜ*. As mentioned, an example feature vector could be: ${x}_{t} = {\left[attendanceAllowance,population85plus,householdIncome,…\right]}_{t}$

Over t = 1 ... T, the LSTM unrolls, updating hidden and cell states as: ${i}_{t} = σ \left({W}_{i}{x}_{t}+{U}_{i}{h}_{t - 1}+{b}_{i}\right)$ ${f}_{t} = σ \left({W}_{f}{x}_{t}+{U}_{f}{h}_{t - 1}+{b}_{f}\right)$ ${o}_{t} = σ \left({W}_{o}{x}_{t}+{U}_{o}{h}_{t - 1}+{b}_{o}\right)$ ${g}_{t} = tanh \left({W}_{g}{x}_{t}+{U}_{g}{h}_{t - 1}+{b}_{g}\right)$ ${c}_{t} = {f}_{t} ⊙ {c}_{t - 1} + {i}_{t} ⊙ {g}_{t}$ ${h}_{t} = {o}_{t} ⊙ tanh \left({c}_{t}\right)$ where σ is the sigmoid function and ⊙ denotes element-wise multiplication. The final hidden state *h_{T}* summarizes the time-series from step 1 to T, providing a condensed representation of all temporal data in ${\left\{{x}_{t}\right\}}_{t = 1}^{T}$.

Simultaneously, the GNN models adjacency based on S and A. Each node v in the graph corresponds to a region, with an initial embedding ${h}_{v}^{\left(0\right)} = {s}_{v}$ drawn from S. Each layer *k* updates ${h}_{v}^{\left(k\right)}$based on neighbours as below (S is implicitly found in ${h}_{v}^{\left(0\right)}$): ${h}_{v}^{\left(k\right)} = {ϕ}^{\left(k\right)} \left({h}_{v}^{\left(k-1\right)}, \left\{{h}_{u}^{\left(k-1\right)}\left|u∈N\left(v\right)\right.\right\}\right)$
where 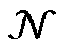 (*v*) denotes neighbours of v and ${h}_{v}^{\left(k\right)}$ is the embedding of node v at layer *k* After K layers, each node v obtains a final embedding ${h}_{v}^{\left(K\right)}$.
*ϕ*^{(*k*)} is a differentiable function, which includes learnable weight matrices that combine the neighbour embeddings.

If an area is a custom microregion (drawn by pinning a map), we can average or weight the GNN embeddings from each local authority overlap, or treat the microregion as a "virtual node."

### (C)Combining LSTM + GNN predictions

The market demand 1301 or the final forecast *ŷ* may be obtained by concatenating or fusing the LSTM's hidden state vector *h_{T}* with the GNN's spatial embedding ${h}_{v}^{\left(K\right)}$ for each node v and passing it through a small feedforward layer MLP as follows: $\hat{y} = MLP \left(\left[{h}_{T}, {h}_{v}^{\left(K\right)}\right]\right)$

The above equation yields a predicted market demand 1301 for a given node v, wherein a node may be, for example, a local authority LA or a user defined catchment area CA, comprising several output areas OA within the user-defined catchment area CA. In some embodiments, an optional attention weight *αₜ* may be applied to certain timesteps or certain neighbour authorities if historical data or adjacency strongly indicates a pattern.

If an area is a custom microregion, e.g. a user-defined catchment area CA, (drawn by pinning or sectioning a map), the GNN embeddings from each local authority LA or output area OA overlapping in the custom microregion may be averaged or weighted, or treat the microregion as a "virtual node." Then the concatenation would be *ŷ* = MLP([*h_{T}*, *hᵥᵢᵣₜᵤₐₗ*]).

### (D)Attention and custom loss

According to optional embodiments of the invention, attention weights *αₜ* may highlight certain timesteps or embed an external context s: ${α}_{t} = \frac{exp \left({e}_{t}\right)}{{\sum }_{k = 1}^{T} exp \left({e}_{k}\right)} , {e}_{t} = {v}^{T} tanh \left({W}_{h}{h}_{t}+{W}_{s}s\right)$

And the final LSTM output may become a weighted sum Σ *αₜhₜ* before concatenation with ${h}_{v}^{\left(K\right)}$*.* Parameters v, **W***ₕ*, **W***ₛ* may be learned by backpropagation over a final forecasting or market demand 1301 loss function. In this way, the parameters v, **W***ₕ*, ***W**ₛ* may be updating by minimizing the overall mean-squared error (MSE) or another loss function.

Then, according to embodiments of the invention, the following loss function may be used: $L \left(y, \hat{y}\right) = \left\{\begin{matrix}α {\left(y-y\right)}^{2} , & if y > \hat{y} \\ {\left(y-\hat{y}\right)}^{2} , & otherwise\end{matrix}\right.$ *y* is the ground-truth label (real measured demand) from historical or measured data for the training data and *ŷ* is the market demand 1301 or the predicted demand, e.g., forecasted bed shortage, for each node, and a > 1 penalizes underestimation as would be desired in the case of forecasting a market demand for dementia beds.

### (E) Explanation of variables

A summary of variables and parameters used in the DFM 130 is provided below:
**LSTM**
   x*ₜ*: time-series input at step t
   *iₜ, fₜ, oₜ:* gating vectors (input, forget, output gates)
   *hₜ, cₜ:* hidden/cell states
**GNN**
   ${h}_{v}^{\left(k\right)}$: embedding for node v at layer *k*
   *ϕ*^{(*k*)}: GNN update function
   S (comprising **s***ᵥ*): initial node (local authority) features
   A: adjacency matrix
**Attention (if used)**
   *αₜ*: weight at timestep *t*
   *eₜ:* unnormalized score for step *t*
   v, **W***ₕ*, **W***ₛ*: learned parameters
**Final output**
   ý: predicted demand
   y: true/labelled demand

### (F) Typical architectures

For the LSTM, a suitable architecture may comprise 2 layers, with about 64 hidden units, and ReLU or Tanh activation functions internally. The final hidden state of the top LSTM layer is used. Other recurrent or transformer based architectures, for example those of temporal convolutional networks (TCN) may be used alongside or in place of the LSTM architecture.

For the GNN, for adjacency, a 2-layer graph convolution or GraphSAGE may be used, each with, for example 64 hidden features. Node embeddings from layer K produce the final ${h}_{v}^{\left(K\right)}$*.*

For the attention mechanism, a small attention block may re-weight {*hₜ*} or combine different node embeddings if multiple adjacency definitions exist. Attention weights *αₜ* are typically calculated as above.

The above architectures are given as examples only and other architectures may also be suitable.

In summary, by fusing temporal signals (LSTM) with spatial adjacency (GNN), plus optional attention on critical timesteps or nodes, the DFM (130) effectively handles dynamic, multidimensional market conditions. The final output *ŷ* is thus a spatio-temporal market demand forecast, calculated as *ŷ* = *f*([**h**_{LSTM},**h**_{GNN}]) (alternative notation for *ŷ* = $MLP \left(\left[{h}_{T}, {h}_{v}^{\left(K\right)}\right]\right)$), and refined by an adjustable loss function that penalizes underestimation. The optional use of attention mechanisms may be beneficial by weighting certain time steps or node features more heavily based on learned relevance.

The combination of the spatio-temporal analysis, using both LSTMs (or TCNs) and GNNs allows the computer-implemented method to handle a vast array of input data and enhances forecasting accuracy under dynamic conditions.

Example Integration: Forecasting housing demand by considering temporal trends (e.g., seasonal fluctuations) and spatial correlations between different neighbourhoods.

As the system accumulates more "true data" from diverse local or facility-specific sources, it may continuously retrain the demand forecasting module (DFM) 130. Over time, the predictive function may become more robust, by leveraging local variations instead of purely regional or local authority-based statistics.

For instance, if a rural authority reveals that actual dementia-care demand (from waitlists) is double the earlier AA-based estimates, the DFM 130 learns to "correct" future predictions in areas with similar demographics or economic conditions.

By merging these data streams, the forecast for dementia-care demand evolves into a dynamic, multi-variable, and progressively accurate function. Reliance on raw AA alone can obscure unregistered need or local idiosyncrasies. Conversely, by layering in local waitlist logs, occupancy data, private chain admission requests, and targeted research, the system pinpoints true shortfalls more effectively and responds to microregional nuances in near real time. The combination of the spatio-temporal analysis, using both LSTMs (or TCNs) and GNNs allows the computer-implemented method to handle a vast array of input data and enhances forecasting accuracy under dynamic conditions.

### Property suitability assessment engine (PSAE) 140

A property suitability assessment engine (PSAE) 140 may be used, for example, to calculate property suitability scores 1401 (collectively referred to as "property suitability scores 1401" and individually as "property suitability score 1401") or land suitability scores 1402 (collectively referred to as "land suitability scores 1402" and individually as "land suitability score 1402"). The property suitability score 1401 or land suitability score 1402 comprises a numeric rating that indicates how well a property or land meets a desired use case, e.g., an elderly care home.

The property suitability assessment engine (PSAE) 140 may combine convolutional neural networks (CNN) and graph neural networks (GNN) to analyse satellite imagery and spatial data in first and second modes of the received second multi-modal dataset.

According to embodiments of the invention, input data to the PSAE 140 comprises satellite imagery in a first mode and spatial data in a second mode of a unified second multi-modal dataset 1121, for example as ingested and formatted by the data acquisition module DAM 110 an optionally imputed by the data imputation and estimation engine DIEE 120 (in which case the input to the PSAE 140 comprises satellite imagery in a first mode and spatial data in a second mode of an imputed second multi-modal dataset 1202, as shown in Fig. 3).

Similar as for the spatial data of the first multi-modal dataset for the demand forecasting module 130, the spatial data of the second multi-modal dataset may comprise a list of properties or lands and their attributes from a user's input or from a relevant database, (e.g. HM Land Registry polygons, planning data, etc.).

The satellite image data of the second multi-modal dataset may comprise satellite images of some or all of the properties or lands in the spatial data. High resolution (e.g. 30 cm per pixel) satellite imagery is available, for example in the Sentinel datasets provided by the European space agency, or from the UK Space Agency, which also may comprise information regarding for example terrain changes, flooding status, or infrastructure expansions.

Automated feature extraction techniques and data fusion methods may be employed to reduce manual analysis efforts and improve assessment accuracy.

Standard spatial data lacks the granularity required for precise property assessments. However, processing high-resolution satellite imagery is computationally intensive and requires advanced techniques to extract meaningful features.

In order to address these issues, a property suitability assessment engine (PSAE) 140 according to an example embodiment of the invention may process satellite imagery and spatial data in first and second modes of the received second multi-modal dataset using a hybrid neural network structure combining results from convolutional neural networks (CNNs) for satellite image data analysis, to extract visual features **f**_{CNN}, and graph neural networks (GNNs) for spatial data analysis, to produce a GNN embedding **h**_{GNN}, capturing adjacency relationships, e.g. zoning or protected areas.

As an example of spatial data, in the UK, the HM Land Registry provides geospatial and text data, including geospatial GML datasets, which may comprise, for example, polygons representing boundaries of each registered title (land or property), and metadata including title number, estate interest, class of title, registration status, record status, historical sale prices, leases (start date, duration), etc. For example, all the property or land polygons within a given catchment area may be retrieved, and further sector-specific filters (e.g., for a care home, exclude properties in flood risk zones, minimum size 1.5 acres), may be applied. Further filters such as ownership type, building type, and maximum size may be added to further refine the list if desired.

In addition, local land charges (LLC) spatial data form the HM Land Register may include, for example, area management or restriction zones, regulation areas, reporting units; potential environmental policies aiming to reduce pollution or protect biodiversity; land-use constraints, e.g., legal agreements on how a property may or may not be used.

Further metadata for the properties or lands in the spatial data may comprise listed buildings, sites of special scientific interest, ancient monuments, and flood risk. Further checks of Environment Agency data (flood-risk assessment, coastal erosion) may be used to see if extra steps or restrictions apply for building or remodelling.

Therefore, spatial data for the PSAE 140 comprises location boundary polygons, local land restrictions, and distances to key amenities, with each node representing one property or land.

The spatial data may be transformed into a graph by representing each property or land as a node with the above features, and defining edges based on proximity between properties, using for example a distance threshold or k-nearest neighbours in an adjacency matrix.

The above types of spatial data and satellite imagery, as well as their sources, are given as non-limiting examples only. Other types of spatial data and satellite imagery may be used, and sources of such data are often country specific according to local government protocols. In the CNN component for image feature extraction, for an image I, for example high-resolution satellite image data of a property or land, convolutional layers apply filters to produce feature maps: ${F}_{i , j}^{\left(l\right)} = σ \left({\sum }_{m , n} {K}_{m , n}^{\left(l\right)} {F}_{i + m , j + n}^{\left(l-1\right)} + {b}^{\left(l\right)}\right)$ where:
*σ* is an activation function (e.g., ReLU);
l denotes the layer, for example 2-7 layers in total;
*K*^{(*l*)} are the convolutional kernels, for example, size 3x3, 5x5, or 7x7;
${F}_{i , j}^{\left(l\right)}$ is the feature map at position (i,j) in layer *l*

The size of the final feature map depends on the input image resolution and pooling used.

A suitable pooling could be 2x2 max pooling, for example after each convolutional block, though other pooling protocols are also possible.

According to example embodiments of the invention, the final CNN output, **f**_{CNN} may be taken as the feature map F from the last convolutional layer, flattened or pooled.

In the GNN component for spatial data, the GNN component processes spatial data as a graph G = (*V,E*) , where nodes represent locations and edges represent spatial relationships. A 2-layer graph convolution (or GraphSAGE) may be used, for example with roughly 64 hidden features, though other architectures may be suitable.

The GNN output **h**_{GNN} comprises node embeddings encoding adjacency or environmental constraints, according to embodiments of the invention.

Finally, visual features and node embeddings extracted from the CNN and the GNN, respectively may be combined according to a Fusion function, where the function may be, for example, concatenation, or weighted summation: $z = Fusion \left({f}_{CNN}, {h}_{GNN}\right) , for example , z = \left[{f}_{CNN}, {h}_{GNN}\right]$

The final suitability score may then be obtained as a numeric rating, for example by passing z through a final multi-layer perceptron layer to output a numeric suitability score. A standard regression or classification loss, e.g., mean-square error or cross-entropy, may be used to match a predicted suitability score for each property or each land to historical or assigned labels, and for both the CNN and GNN, a single end-to-end loss may be backpropagated, updating all parameters.

For instance, during training, flood-zone flags, or restricted areas correlate with lower labelled suitability scores, so the model would weight these features negatively if they have not already been filtered out by sector or user filters, and a property under a tight environmental restriction or in a high-flood risk zone might rank lower for a large new facility. where:
**f**_{CNN} are features from the CNN
**h**_{GNN} are embeddings from the GNN.

The automated feature extraction techniques reduce manual efforts by identifying relevant features at multiple scales, and the data fusion methods integrate multiple data sources, enhancing the assessment's accuracy.

An example integration includes assessing property suitability by analysing satellite images for infrastructure proximity (e.g., roads, public transport) and combining it with spatial data on amenities (e.g., schools, hospitals).

Therefore, the PSAE 140 improves assessment accuracy by leveraging both visual and spatial data, enables efficient processing of complex data types, reduces manual analysis efforts through automation.

By combining these different kinds of data sources using adapted models, the PSAE 140 part of the system advantageously filters and assess properties by land size, building type, flood or environmental restrictions, planning permission constraints, and an estimated real-time or historical sales price (or lease value). The PSAE 140 may output property suitability scores 1401 or land suitability scores 1402 and provide these as input to a matching algorithm module (MAM) 150, which will be discussed in the next section.

### Matching Algorithm Module (MAM) 150

According to embodiments of the invention represented in Fig. 3 and Fig. 5, a Matching Algorithm Module (MAM) 150 implements a reinforcement learning (RF) framework 500 and may be used for performing the recommendation step of the computer-implemented method for adaptive matching of a property or a land to a predicted market demand, for example by evaluating optimal matches 1501 for property-operator (or land-operator) match pairs to respond to a given market demand 1301 predicted by the DFM 130 and for a given list of properties for which property suitability scores 1401 (or land suitability scores 1402) have been calculated by the PSAE 140, as shown in Fig. 3.

As an overview, the MAM 150 receives (i) the market demand 1301 predicted by the DFM 130, (ii) a shortlist of suitable properties or land in the form of property suitability scores 1401 or land suitability scores 1402, respectively, from the PSAE 140, and (iii) a list of potential operators, i.e., operators of property or land, with their constraints, if applicable.

According to an embodiment of the invention shown in Fig. 5, the MAM 150 may comprise a reinforcement learning (RF) framework 500, comprising policy optimization 500b, hierarchical RL 500c, single RL agent 500a or multiagent RL 500d, and/or meta-learning 500e, to enhance learning efficiency and match market demand to property and operator. The action *aₜ* 510 (individually referred to as "action *aₜ* 510" and collectively referred to as "actions *aₜ* 510") of the RL agent 500a may be construed as picking which property or land goes to which operator to meet the predicted market demand, or as matching a given property or land to an operator to meet a predicted market demand.

Static matching algorithms cannot adapt quickly to changing market conditions, affecting match accuracy. Defining appropriate reward functions and ensuring efficient learning in RL frameworks pose additional challenges.

The MAM 150 according to embodiments of the invention utilizes a reinforcement learning framework to adaptively match a predicted market demand 1301 with suitable properties and operators.

According to an example embodiment of the invention, the RL agent's state *sₜ* 520 comprises (1) predicted market demand 1301 from the DFM 130 for a region, for example a user-defined catchment area CA or a local authority LA in the UK; (2) property suitability scores 1401 or land suitability scores 1402 calculated from the PSAE 140; (3) operator availability and constraints.

According to embodiments of the invention, properties or lands may be ranked according to their suitability scores 1401, 1402, as predicted by the PSAE 140 for responding to a market demand.

The RL agent's action *aₜ* 510 then comprises choosing potential matches between properties or lands, e.g., the 5-10 properties with the highest property suitability scores 1401 or the properties remaining after consideration of user-applied filters like only freehold, only company-owned, only suitable for new builds, etc., and operators for evaluation, e.g., choosing property X for operator Y, and the reward *rₜ* 530 (individually referred to as "reward *rₜ* 530" and collectively referred to as "rewards *rₜ* 530") comprises a metric of success of the resulting match between the property and operator, minus the cost of such a match.

Ranking property suitability scores 1401 or (land suitability scores 1402) according to embodiments of the invention helps the RL agent focus on the most suitable properties first, but at the same time does not force the agent to pick the single top property. This flexibility allows for operator-specific needs or cost constraints, for example environmental or regulatory constraints.

The list of operators may come from a real-estate operator database, for example, for UK care homes, the Care Quality Commission dataset provides operator IDs, operator groups, legal names, and its existing care homes, from which aggregates or averages may be calculated, for example total beds, specializations, bed growth rate, etc. For social housing, a list of operators may come from datasets provided by the Regulator of Social Housing and local authority datasets or similar in other countries. Further operator data may be found, for example, from APIs provided by Companies House and Google Maps data.

The RL agent 500a selects (operator, property pairs) and calculates rewards *rₜ* 530 for each (operator, property) match from the set of possible actions: ${r}_{t} = R \left({s}_{t}, {a}_{t}\right) = β ⋅ Success \left({a}_{t}\right) - γ ⋅ Cost \left({a}_{t}\right)$ where:
*β* and *γ* are weighting factors, which may be initialized according to a user-definition or set by domain heuristics. Example weighting factors of *β* = 1 and *γ* = 0.5 would emphasize success more than cost, for example. Other weighting factors may be suitable and can be refined based on priorities or urgency of project development, weighed against fragility of a local environment, for example.

Reward functions may be application specific according to embodiments of the invention. In the case of dementia-care, rewards *rₜ* 530 could be for example number beds filled or expected revenue (occupancy rates, average price per bed) and a suitable cost would be expected financial cost (cost of conversion, operating costs). In the case of an EV-charging station, a reward could be revenue, and a suitable cost would be environmental impact. Another example, for example when matching an operator to a property for a new care-home site, success may be how quickly the property is filled, cost might be refurbishment cost or location penalty. These examples of reward functions provide the advantages of maximizing return in a development project while minimizing cost and also minimizing resources used.

Variables (the RL policy weights *β* and y) may be initialized randomly or from partial heuristic rules gleaned from prior deals. Over multiple episodes, the MAM refines its matching policy via Proximal Policy Optimization as shown below or a similar RL technique.

The module therefore utilizes advanced RL techniques to enhance learning efficiency and methods like Proximal Policy Optimization (PPO), wherein a probability ratio is clipped to [1-ε, 1+ε], preventing overly large updates and stabilizing learning, may update the policy *π_{θ}* by maximizing the expected return or reward as follows: ${max}_{θ} {E}_{t} \left[min\left({r}_{t}\left(θ\right){\hat{A}}_{t},clip\left({r}_{t}\left(θ\right),1-ϵ,1+ϵ\right){\hat{A}}_{t}\right)\right]$ where:
${r}_{t} \left(θ\right) = \frac{{π}_{θ} \left({a}_{t}\right)}{{π}_{{θ}_{old}} \left({a}_{t}\right)}$ is the probability ratio, measuring how different the new policy's action probabilities are from the old policy, controlling the update step;
*Aₜ = Q*(*sₜ, aₜ*) - *V*(*sₜ*) is the advantage estimate, to measure how much better an action is than the baseline value, i.e., if *Aₜ >* 0, the action is better than expected and the policy is nudged slightly; PPO uses *Aₜ* to guide gradient steps.
*ε* is a small constant, for example *ε* may be set around 0.1-0.2 For example, *ε* = 0.2 would allow about +/- 20% update ratio around the old policy.

The Matching Algorithm Module 150 according to embodiments of the present invention therefore implements hierarchical reinforcement learning 500c, enabling decomposition of the task into sub-tasks, allowing the agent to learn at different levels of abstraction.

In an optional embodiment of the invention, a multi-agent reinforcement learning 500d framework may be used for the MAM 150, wherein one agent represents the property side, another the operator side, coordinating for an overall optimum. Incorporating multiple agents representing different stakeholders (e.g., buyers, sellers) allows modelling interactions more realistically.

Finally, meta-learning 500e in the MAM 150 optionally enables the agent 500a or multiple agents to learn how to learn, improving adaptability to new market conditions.

The MAM 150 according to embodiments of the invention provides the advantages of enables adaptive learning, improving matching accuracy in response to changing market conditions, learns optimal strategies through interaction with the environment, enhances learning efficiency through advanced RL techniques and innovations, and provides optimal matches 1501 at its output as shown in Fig. 3 and in Fig. 5.

According to an example integration, the RL agent 500a learns to prioritize properties that match emerging market trends, such as increased demand for eco-friendly homes, by adjusting its policy based on feedback.

In a practical example according to embodiments of the invention, given a user who wants to place a new 60-bed dementia care facility in a 5-mile catchment area CA for which the demand forecasting module DFM 130 predicted a market demand 1301 of 110 beds, and for which the property suitability assessment engine 140 returned 7 property candidates with strong or moderate property suitability scores 1401, the matching algorithm module (MAM) 150 may collect operator data from the CQC registry, and find for example 250 operators region-wide.

The MAM 150 may filter out certain operators, for example those with no expansion in several (e.g. 15+) years or those with a poor CQC rating, and may pick a list of 15 operators out of the 250 considered most likely to expand, e.g., an operator with an interest in specific geographic or property profiles.

The RL agent 500a of the MAM 150 would then see a state *sₜ* 520 with a demand forecast of *N̂ ≈* 110, 7 property candidates {*P₁,...P₇*}, each with a property suitability score 1401, location, and cost data, as well as 15 operator candidates, {*O₁*,...*O₁₅*}, each with expansions, bed-size preferences, CQC ratings, etc.

The agent 500a may evaluate actions *aₜ* 510 as matching pairs (*Pᵢ, Oⱼ*), and for each pair, the reward *rₜ* = *β* · Success(*Pᵢ*, *Oⱼ*) - *γ* · Cost(*Pᵢ*, *Oⱼ*) may be estimated. Success may be for example defined as the probability that the operator invests and achieves an 85% occupancy rate within two years, while cost may comprise property acquisition, refurbishment, or new building cost estimates.

The Proximal Policy Optimization (PPO) may update based on user acceptance or real outcomes. For example, if a user picks property-operator pair (P₂, O₉) and it leads to a real transaction, the agent may receive a positive advantage, reinforcing similar matches. Therefore, as shown in Fig. 3, the MAM 150, receiving a market demand 1301, property suitability scores 1401 or land suitability scores 1402, and a list of operators (list of operators not shown in Fig. 3), and as shown in Fig. 5 evaluates rewards *rₜ* 530 for each property-operator pair, i.e., each state *sₜ* 520 via a reinforcement learning framework 500. The MAM 150 merges the DFM forecast, the PSAE property ranking, and an operator pool (for example from the CQC or other sources), to evaluate rewards *rₜ* 530 for each property-operator pair, and finally the MAM 150 outputs the optimal matches 1501, for example the 5-10 property-operator pairs with the highest calculated rewards *rₜ* 530.

The MAM 150 according to embodiments of the invention is therefore an adaptive matching system that over time learns from optimal matches 1501, i.e., operator success or failure of these matches.

### Automated Report Generation Module (ARGM) 160

In an entirely optional embodiment of the invention, as shown in Fig. 3, an Automated Report Generation Module (ARGM) 160 may generate professional reports 1601 by synthesizing extensive data into coherent narratives using natural language processing (NLP) models and template integration. Automating the report generation process benefits from advanced natural language generation techniques tailored to the real estate context. Challenges include ensuring the reports are accurate, coherent, and aligned with professional standards.

The ARGM 160 may employ transformer-based language models that are fine-tuned on real estate and financial contexts. These models are trained to generate human-like text based on input data structures.

The training process involves data preparation, including (1) collecting a corpus of professional real estate reports; and (2) annotating the data to map input data structures (e.g., property data, market analysis) to corresponding textual narratives.

An example pre-trained model would be a pre-trained LLM model from an Azure-based environment, pre-trained on real estate corpora, including professional reports from Colliers, Knight Frank, or CBRE, plus local planning authority guidelines, property valuation guidelines (e.g., RICS standards), IFRS-based financial reporting templates, or local planning authority formats. This ensures the generated professional reports adhere to recognized real estate and financial norms.

In a next step, the training process may involve model fine-tuning, wherein the pre-trained language model may be fine-tuned using supervised learning to generate text conditioned on the input data.

The loss function L may minimized over the training data: $L \left(θ\right) = - {\sum }_{i = 1}^{N} log P \left({y}_{i}\left|{x}_{i}; θ\right.\right)$ where:
*θ* are the model parameters.
*xᵢ* is the input data
*yᵢ* is the target text.

The ARGM 160 may further incorporate templates to ensure that generated reports 1601 adhere to professional standards and formats., e.g. RICS standards. The generated text is aligned with placeholders in the templates, ensuring consistency and coherence.

To provide further quality assurance, the ARGM provides automated validation checks for the reports post-generation, including: (1) semantic consistency, ensuring that all data points mentioned in the report match the input data; (2) linguistic quality including grammar and spell-check algorithms may be applied, and compliance checks comprising verifying adherence to industry regulations and standards.

An example integration of the ARGM may be, for example, generating a report 1601, for example a market analysis report for a specific catchment area, including demand forecasts, property assessments, and recommendations, all synthesized into a coherent narrative. The reports 1601 generated by the ARGM 160 may for example be transmitted to client devices 300.

The ARGM 160 provides technical advantages such as streamlining the report generation process, reducing manual efforts, and maintaining high-quality outputs across communications, ensures consistency and adherence to professional standards.

### Reinforcement Feedback and Continuous Learning System (RFCLS) 170

According to an optional embodiment of the invention, real-world feedback, for example user feedback 80 as shown in Fig. 2, may be collected from client devices 300 and fed to a Reinforcement Feedback and Continuous Learning System (RFCLS) 170, which may be integrated into the training processes to refine the machine learning models (e.g., DFM 130, PSAE 140, MAM 150) of the invention, continuously through a server-device architecture such as the one illustrated in Fig. 2. The architecture efficiently processes data by caching, pre-calculation, and smart data retrieval techniques, optimizing resource utilization.

The RFCLS 170 collects outcome data from real-world interactions, such as transaction completions and client satisfaction metrics, through the server-device architecture, for example receiving user feedback 80 from client devices 300.

This data is then optionally integrated into the training processes of the machine learning models across the various modules. For example, RFCLS 170 may track user or system outcomes through a provided user application, e.g., if a recommended match leads to a completed sale (verified via monthly HR Land Registry updates) or the user manually flags a success/failure. These outcomes or user feedback 80, once received in the RFCLS 170, form a feedback loss term; for supervised learning models, the loss function is updated to include the feedback data as follows: ${L}_{total} = {L}_{original} + {λL}_{feedback}$ where *λ* is a weighting factor and *L_{feedback}* measures the gap between predicted success and actual success or deal flow. Model parameters may be partially retrained in mini-batches.

The RFCLS 170 may then further perform adaptive learning by identifying patterns from successes and failures, adjusting model parameters accordingly, and incorporating new data sources wherein new relevant data sources may be identified by the RFCLS and are incorporated to enhance accuracy.

For example, new data sources may be identified if the RFCLS 170 observes repeated user interest in, for instance, specific microregions or categories of land use, prompting the data acquisition module 110 to ingest additional local CSV or PDF files that become newly relevant if available.

Other examples could include an internal data crawler or aggregator that could query public planning portals.

### Server-Device Architecture Application

As shown in Fig. 2 and Fig. 3, according to an exemplary, non-limiting embodiment of the invention, a system 200 comprising a server-device architecture may be used for implementing the computer implemented-method according to embodiments of the invention. A system 200 according to embodiments of the invention may comprise a server-device architecture in which steps comprising heavy data processing and model training, e.g., the training of the LSTM and GNN of the DFM 130, and the CNN of the PSAE 140, take place on centralized computing units 100 comprising processors configured for performing steps of the computer-implemented method according to embodiments of the invention.

Potential users of the system and/or method may interact with client devices 300, e.g. smartphones, tablets, laptops, with less computational power, which primarily submit requests and display results. For example, as shown in Fig. 3, a user may send a request via a user input 70 to the centralized computing unit 100, where the user input 70 may comprise, for example, a request for matches in a given catchment area along with preferences and/or constraints.

The machine learning models hosted by the centralized computing unit 100 may then compute analysis results 90, for example comprising market demands 1301, property suitability scores 1401, optimal matches 1501, and/or generated reports 1601, and send the analysis results 90 to the at least one client device 300.

In addition, as shown in Fig. 2, user feedback 80, comprising for example feedback on real world matches, may be transmitted from client devices 300 to the centralized computing unit 100 for ingestion by the reinforcement feedback and continuous learning system 170. Machine learning models of the invention (e.g., DFM 130, PSAE 140, MAM 150, etc.) may then receive model updates 60 from the RFCLS 170 and update with minimal latency, as shown according to embodiments of the invention in Fig. 2.

The interaction between the RFCLS 170 and the other data processing and analysis modules, in the server-device architecture allows for efficient collection and processing of live data, as client devices 300 running a feedback collection application may, for example, collect user interactions, preferences, and feedback in real-time and submitting inputs, e.g. defining catchment areas, uploading new PDFs, confirming an operator match, while the centralized computing units 100 aggregate and process the data, updating models with minimal latency and keeping the workload for client devices 300 light.

An example hardware setup for the at least one centralized computing unit 100 may comprise a centralized computing unit comprising a plurality of graphical processing units (GPU) in a single multi-GPU machine or multi-node cluster for distributed training, for example 4-8 GPUs, such as the Nvidia A100 model, to train the machine learning models (LSTM/TCN, CNN, GNN) of the modules, for example the DIEE 120, the DFM 130, the PSAE 140, and the MAM 150.

Parallelization may be the standard mode of operation, for example, each of the above-mentioned modules may be run independently if triggered simultaneously. For example, the CNN of the PSAE 140 may retrain on updated satellite imagery while the GNN of the DFM 130 or the PSAE 140 may retrain on newly ingested adjacency data. Client devices 300 may comprise central processing units (CPU) with minimal computational power, e.g., standard tablets, smartphones, and laptops since the heavy computations may be performed on a GPU cluster. Caching partial results, for example in a cache 180 as shown in Fig. 2, further reduces repeated training. For novel or highly specific requests, e.g., a user-defined 3.7 mile radius catchment area CA with user-defined filters, the centralized computing unit 100 may dynamically compute market demands 1301 and/or property or land suitability scores 1401, 1402, using available partial data in addition to on-demand inference.

The at least one centralized computing unit 100 may host a database that covers at least LA-level data nationwide and partial output area OA level data, where available or imputed. Batch pipelines may be scheduled so that each new data ingestion (from DAM 110) may trigger partial re-training or incremental model updates. Geospatial indexing techniques may be used to facilitate fast retrieval of polygons and adjacency queries. Whenever major updates occur (new data sets, expansions in coverage), re-calculation of features and adjacency relationships can be queued for batch jobs.

An example integration may include adjusting demand forecasting models based on user search patterns and feedback collected from the app, improving future predictions. Any final user "deal" confirmations may feed into the Reinforcement Feedback and Continuous Learning System (RFCLS 170), which may prompt partial RL policy updates in the PSAE 140 for example. In some cases, such as newly ingested unstructured data or large expansions in the dataset, AutoML pipelines, for example for the DIEE 120 or the DFM 130 may be triggered to improve hyperparameters.

The RFCLS 170 therefore facilitates progressive learning, allowing the system to adapt based on real-world outcomes and leads to improved performance and personalization, while ensuring all the models of the overall system remain up-to-date with the latest market trends.

In conclusion, the overall system as described in the above paragraphs according to example embodiments of the invention may be applicable to a broad spectrum of real estate segments, including but not limited to accommodation for the vulnerable, infrastructure projects, commercial properties, residential properties, and affordable and social housing.

By processing diverse data types through the Data Acquisition Module (DAM) 110 and subsequent modules, the system effectively addresses the unique challenges of these segments, facilitating efficient use-case selection via the matching algorithms.

The system according to embodiments of the invention provides technical solutions for solving real-world technical problems in the property and land industry by enabling accurate demand forecasting, optimal property matching, and efficient report generation.

The architecture is designed to optimize processing efficiency and scalability through the unique server-device setup. Critical computations are handled on powerful servers, while client devices running a mobile application provide real-time data and receive outputs with minimal computational burden.

### 5. MATHEMATICAL FRAMEWORK OF SYSTEM OPERATIONS

Below is a summary of mathematical operations for each part of the system according to non-limiting example embodiments of the invention.
**Data Acquisition and Preprocessing:** ${X}_{preprocessed} = DAM \left(110\right) \left({X}_{raw}\right)$
**Data Imputation and Estimation:**
   Model Selection via AutoML: $\left(M*,H*\right) = {argmin}_{M ∈ M , H ∈ H} {L}_{validation} \left(M, H\right)$
   Imputation: ${X}_{complete} = M * \left({X}_{preprocessed};H*\right)$
**Demand Forecasting:** ${\hat{Y}}_{demand} = DFM \left(130\right) \left({X}_{complete}\right)$
**Property Suitability Assessment:** ${\hat{Y}}_{suitability} = PSAE \left(140\right) \left({X}_{complete}\right)$
**Matching Algorithm:** $OptimalMatches = MAM \left(150\right) \left({\hat{y}}_{demand}, {\hat{y}}_{suitability}\right)$
**Automated Report Generation:** $Report = ARGM \left(160\right) \left({\hat{Y}}_{demand}, {\hat{Y}}_{suitability}, OptimalMatches\right)$

### 6. SCOPE OF APPLICATION

The computer-implemented method and system 200 as disclosed according to embodiments of the invention may be applied to a variety of infrastructure and real estate segments, including but not limited to (1) accommodation for the vulnerable, for example elderly care facilities, extra care housing, physical disability facilities, mental health facilities, kindergarten, daycare centres; (2) infrastructure projects, such as electric vehicle (EV) charging stations, data centres, renewable energy installations; (3) commercial properties, such as food retailers, specialty shops, and office spaces; (4) residential properties, for example single-family and multi-family homes and condominiums; and (5) affordable and social housing, such as low-income housing projects, subsidised rental units, community housing initiatives.

While the system 200 is capable of addressing all these segments, its advantages are especially pronounced in niches that are regularly neglected or overlooked due to the complexity of data analysis, the unavailability of easily accessible data, small amount of data available, and frequently missing data. By utilizing the Data Acquisition Module (DAM) 110, the system 200 may ingest diverse types of data relevant to each segment, process each type through the subsequent modules, and ultimately lead to efficient use-case selection via the matching algorithms.

Each embodiment herein may be used in combination with any other embodiment(s) described herein. While the disclosure has been illustrated and described with reference to various example embodiments, it will be understood that the various embodiments are intended to be illustrative, not limiting. It will further be understood by those skilled in the art that various changes in form and detail may be made without departing from the true spirit and full scope of the disclosure, including the appended claims and their equivalents. It will also be understood that any of the embodiment(s) described herein may be used in combination with any other embodiment(s) described herein.

### REFERENCES

[1] Carra, Martina, Giulio Maternini, and Benedetto Barabino. "On sustainable positioning of electric vehicle charging stations in cities: An integrated approach for the selection of indicators." Sustainable cities and society 85 (2022): 104067.
[2] Mohammed, Abdallah, et al. "Strategies and sustainability in fast charging station deployment for electric vehicles." Scientific Reports 14.1 (2024): 283.
[3] Harish, Nithin. "The Future of Critical Metals in Electric Vehicles." (2023).
[4] "Using CQC data." Accessed online: https://www.cqc.org.uk/about-us/transparency/usinq-cqc-data. (2025).
[5] "List of registered providers - 17 January 2025." Accessed online: https://www.gov.uk/government/publications/registered-providers-of-social-housing/f286ec52-b234-415d-88d4-d8322fd24896. (2025).

## Claims

1. A computer-implemented method for predicting a market demand (1301) in a specific geographic region such as a city or a neighbourhood, wherein responding to the market demand (1301) requires the exploitation of a property or a land in the specific geographic region, and for recommending at least one property or at least one land suitable for being exploited for the purpose of responding to the market demand, comprising the steps of:
- receiving and preprocessing a first multi-modal dataset (1) and a second multi-modal dataset (2), wherein the first multi-modal dataset (1) is known to be correlated with a market demand (1301) in the specific geographic region and wherein the second multi-modal dataset (2) comprises at least spatial data, satellite image data, and land register data for a plurality of properties or a plurality of lands in the specific geographic region, to generate a preprocessed first multi-modal dataset (11) and a preprocessed second multi-modal dataset (12);
- predicting a market demand (1301) using spatio-temporal analysis of the preprocessed first multi-modal dataset (11), wherein a temporal analysis comprises using a recurrent neural network to analyse time-series data of a first mode of the preprocessed first multi-modal dataset (11), and wherein a spatial analysis comprises using a graph neural network (GNN) to analyse spatial data in a second mode of the preprocessed first multi-modal dataset (11);
- calculating a property suitability score (1401) or a land suitability score (1402) for each property or each land in the plurality of properties or plurality of lands in the land register data by combining results from convolutional neural network (CNN) analysis of satellite image data in a first mode of the preprocessed second multi-modal dataset (12) and results from graph neural network (GNN) analysis of spatial data in a second mode of the preprocessed second multi-modal dataset (12); and
- recommending a plurality of optimal matches (1501) to a known list of operators for responding to the predicted market demand (1301), wherein the plurality of optimal matches (1501) comprises property-operator pairs or land-operator pairs.

2. The computer-implemented method of claim 1, further comprising acquiring a user feedback (80) from a user of the computer-implemented method, to integrate into a reinforcement feedback and continuous learning system (170) to fine-tune a plurality of parameters of each of the neural networks of the computer-implemented method.

3. The computer-implemented method of claim 1 or 2, further comprising receiving a user input (70) from a user of the computer-implemented method, wherein the user input (70) comprises the specific geographic region for which a plurality of optimal matches (1501) should be returned.

4. The computer-implemented method according to any one of the previous claims, wherein the recurrent neural network comprises a long-short term memory network (LSTM) or a temporal convolutional network (TCN).

5. The computer-implemented method according to any one of the previous claims, further comprising generating a report to apply for planning permission at a local authority to exploit at least one property or at least one land of the plurality of optimal matches (1501) recommended by the method.

6. The computer-implemented method according to any one of the previous claims, wherein the market demand (1301) comprises a market demand for electric vehicle charging stations, a market demand for beds in a dedicated senior care facility, or a market demand for apartments in social housing.

7. The computer-implemented method according to any one of the previous claims, wherein preprocessing the first multi-modal dataset (1) and the second multi-modal dataset (2) comprises performing natural language processing of each of the modes of the first multi-modal dataset (1) and the second multi-modal dataset (2).

8. The computer-implemented method according to any one of the previous claims, wherein after receiving and preprocessing the first multi-modal dataset (1) and the second multi-modal dataset (2), the method comprises imputing a plurality of missing values from the preprocessed first multi-modal dataset (11) and the preprocessed second multi-modal dataset (12) using either a neural network for each of the modes of each dataset if the dataset size is greater than or equal to a configurable threshold, or a random forest regression model if the dataset size is below the configurable threshold, to generate an imputed first multi-modal dataset (1201) and an imputed second multi-modal dataset (1202).

9. The computer-implemented method according to any one of the previous claims, wherein the time-series data of a first mode of the first multi-modal dataset comprises a plurality of chronologically ordered records collected at defined intervals, for example daily, monthly, or yearly, and wherein each record of the plurality of chronologically ordered records comprises numeric and/or categorical variables indicative of demographic or resource usage metrics, and wherein the time-series data is configured to be fed into a recurrent neural network architecture for temporal analysis.

10. The computer-implemented method according to any one of the previous claims, wherein the spatial data of a second mode of the first or second multi-modal dataset comprises at least one type of spatial data from the list comprising: coordinate-based polygon boundaries configured to represent land or administrative regions, for example stored in a shape file or equivalent; raster satellite imagery with georeferencing; adjacency relationships between regions, for example between local authorities sharing a boundary.

11. The computer-implemented method according to any one of the previous claims, wherein a list or a report comprising the plurality of optimal matches (1501) may be made public.

12. The computer-implemented method according to any one of the previous claims, wherein recommending a plurality of optimal matches (1501) to a known list of operators for responding to the predicted market demand comprises calculating a reward (530) using a reinforcement learning framework (500) for each property-operator pair or each land-operator pair given (i) the predicted market demand (1301); (ii) the property suitability scores (1401) or land suitability scores (1402) for each property or each land in the plurality of properties or plurality of lands in the land register data, and (iii) the known list of operators, and generating the plurality of optimal matches (1501) as a list comprising the property-operator pairs or the land-operator pairs with the highest calculated reward (530).

13. A system (200) comprising at least one centralized computing unit (100), wherein the at least one centralized computing unit (100) comprises one or more processors (220) configured for carrying out the steps of a computer-implemented method for predicting a market demand (1301), wherein responding to the market demand (1301) requires the exploitation of a property or a land, and configured for recommending at least one property or at least one land suitable for being exploited for the purpose of responding to the market demand, comprising receiving and preprocessing a first multi-modal dataset (1) and a second multi-modal dataset (2), wherein the first multi-modal dataset (1) is known to be correlated with a market demand in the specific geographic region and wherein the second multi-modal dataset (2) comprises at least spatial data, satellite image data, and land register data for a plurality of properties or a plurality of lands in the specific geographic region, to generate a preprocessed first multi-modal dataset (11) and a preprocessed second multi-modal dataset (12); predicting a market demand (1301) using spatio-temporal analysis of the preprocessed first multi-modal dataset (11), wherein a temporal analysis comprises using a recurrent neural network to analyse time-series data of a first mode of the preprocessed first multi-modal dataset (11), and wherein a spatial analysis comprises using a graph neural network (GNN) to analyse spatial data in a second mode of the preprocessed first multi-modal dataset (11); calculating a property suitability score (1401) or a land suitability score (1402) for each property or the each land in the plurality of properties or plurality of lands in the land register data by combining results from convolutional neural network (CNN) analysis of satellite image data in a first mode of the preprocessed second multi-modal dataset (12) and results from graph neural network (GNN) analysis of spatial data in a second mode of the preprocessed second multi-modal dataset (12); and recommending a plurality of optimal matches (1501) to a known list of operators for responding to the predicted market demand (1301), wherein the plurality of optimal matches (1501) comprises property-operator pairs or land-operator pairs.

14. The system (200) according to the previous claim, wherein the system further comprises at least one client device (300) configured for collecting a user input (70) and a user feedback (80) from a user of the system (200), and further configured to communicate the user input (70) and the user feedback (80) with the at least one centralized computing unit (100), wherein the one or more processors (220) of the at least one centralized computing unit (100) are configured to analyse the user feedback (80) and update, via a reinforcement feedback and continuous learning system (170), a plurality of parameters of each of the neural networks of the system.

15. The system (200) according to the previous claim, wherein the at least one centralized computing unit (100) is configured to send a plurality of analysis results (90) computed by the one or more processors (220) to the at least one client device (300).
